Europäisches Patentamt

European Patent Office

Office européen des brevets

(11) Veröffentlichungsnummer: **0 336 055**
**A1**

## (12) EUROPÄISCHE PATENTANMELDUNG

(21) Anmeldenummer: 89101183.5

(22) Anmeldetag: 24.01.89

(51) Int. Cl.⁴: **B60K 23/08**

(30) Priorität: 02.04.88 DE 3811214

(43) Veröffentlichungstag der Anmeldung:
11.10.89 Patentblatt 89/41

(84) Benannte Vertragsstaaten:
CH DE FR GB IT LI SE

(71) Anmelder: **Dr.Ing.h.c. F. Porsche**
**Aktiengesellschaft**
**Porschestrasse 42**
**D-7000 Stuttgart 40(DE)**

(72) Erfinder: **Witte, Lothar, Dipl.-Ing.**
**Panoramastrasse 78**
**D-7143 Vaihingen/Enz(DE)**
Erfinder: **Stelter, Norbert, Dipl.-Ing.**
**Buchenstrasse 33**
**D-7251 Weissach(DE)**
Erfinder: **Appt, Ulrich, Dipl.-Ing. FH**
**Gebelsbergstrasse 68A**
**D-7000 Stuttgart 1(DE)**
Erfinder: **Geiger, Rolf, Dipl.-Ing. FH**
**Solitudestrasse 292**
**D-7000 Stuttgart 31(DE)**
Erfinder: **Wolpert; Klaus-Gerhard, Dipl.-Ing.**
**Thomas-Mann-Strasse 34**
**D-7015 Korntal-Münchingen 2(DE)**
Erfinder: **Lawitzki, Stephan, Dr. Dipl.-Ing.**
**phys.**
**Im Wengert 33**
**D-7251 Flacht(DE)**

(54) **Anordnung zur Steuerung der Kraftübertragung auf wenigstens zwei Achsen eines Kraftfahrzeuges.**

(57) Die Anordnung steuert ein Reibglied zur Begrenzung eines Drehzahlausgleichs zwischen den Achsen eines zweiachsigen bzw. allradangetriebenen Fahrzeugs in Abhängigkeit von der Differenz der mittleren Radgeschwindigkeiten beider Achsen (Geschwindigkeitslängsdifferenz); diese wird mit zwei fahrgeschwindigkeitsabhängigen Toleranzbändern verglichen, wobei das erste für positive und das zweite für negative Geschwindigkeitslängsdifferenzen maßgeblich ist. Liegen die Werte der Geschwindigkeitslängsdifferenzen oberhalb der ersten oder unterhalb des zweiten Toleranzbandes, wird die Begrenzung erhöht, liegen die Werte innerhalb der Toleranzbänder, so wird die augenblickliche Begrenzung beibehalten und bei zwischen den Toleranzbändern liegenden Werten wird die Begrenzung vermindert. Die Anordnung ist ferner erweiterbar um eine Adaptionseinrichtung der Grenzkriterien bezüglich unterschiedlicher Abrollradien der Räder und um eine Kurvenkorrektureinrichtung.

FIG.3

## Anordnung zur Steuerung der Kraftübertragung auf wenigstens zwei Achsen eines Kraftfahrzeuges

Die Erfindung betrifft eine Anordnung nach der Gattung des Hauptanspruchs.

Kraftfahrzeuge mit permanentem Allradantrieb benötigen zur Vermeidung von Verspannungen im Antriebsstrang zwischen beiden Achsen eine Ausgleichseinrichtung, beispielsweise in Form eines Mittendifferentials. Dieses ermöglicht Drehzahlunterschiede zwischen den Rädern beider Achsen, wie sie beispielsweise bei Kurvenfahrt oder Reifen mit unterschiedlichen Abrollradien auftreten.

Bei Verlust der Haftreibung zwischen den Rädern und der Fahrbahn lediglich einer Achse geht jedoch bekanntlich aufgrund der Differentialwirkung des Mittendifferentials die Vortriebskraft des gesamten Antriebs verloren, so daß ein Einsatz eines derartigen Allradantriebs ohne eine Einrichtung zur Begrenzung der Ausgleichswirkung (Differentialsperre oder -bremse) wenig sinnvoll erscheint.

Es ist bekannt, zur Begrenzung der Ausgleichswirkung sogenannte Visko-Kupplungen oder Mittendifferentiale der Torsen-Bauart einzusetzen. Diese selbsttätig wirksamen Bauelemente weisen prinzipbedingt Nachteile auf, da sie bei enger Kurvenfahrt oder stark unterschiedlichen Abrollradien der Räder bereits wirksam werden können und so einen fahrdynamisch notwendigen Drehzahlunterschied zwischen den Achsen verhindern. Dies schränkt jedoch die Rangierbarkeit des Fahrzeuges (insbesondere auf glatter Fahrbahn) und das Befahren enger Kurven ein (Auftreten des sogenannten "Engeckenbremsens").

Mit der DE-OS 35 05 455 ist eine Vorrichtung zum automatischen Zu- und Abschalten von Antriebselementen eines Kraftfahrzeugs bekannt geworden. Hierbei wird das Kraftfahrzeug im Normalfall über lediglich eine Achse angetrieben. Bei Erreichen fahrdynamischer Grenzwerte, wie beispielsweise eines bestimmten Geschwindigkeitsschlupfs zwischen den Rädern zweier Achsen, wird in Stufen über eine schaltbare Kupplung und ein Ausgleichsgetriebe eine zweite Antriebsachse, eine Ausgleichsgetriebesperre, eine Hinterachs- und eine Vorderachsdifferentialsperre zugeschaltet.

Es ist aus dieser Schrift bekannt, daß die Grenzwerte für das Zu- bzw. Abschalten von Antriebselementen sehr niedrig liegen müssen, damit eine ausreichende fahrdynamische Wirksamkeit und somit eine Verbesserung des Fahrverhaltens gegenüber konventionellen Antriebssystemen erreicht wird. Dieses erfordert jedoch eine Kurvenerkennung und -korrektur, welche hier mittels eines Lenkwinkelsensors vorgenommen wird.

Zur Erkennung von unterschiedlichen Abrollradien der Räder ist ferner eine Anpassungselektronik vorgesehen, welche die gemessenen Raddrehzahlwerte entsprechend korrigiert.

Das Zu- bzw. Abschalten einer Fahrzeugachse erscheint jedoch aufgrund der fahrdynamischen Vorteile (Fahrstabilität), die ein permanenter Allradantrieb bietet, wenig sinnvoll. Desgleichen kann ein schlagartiges Zu- bzw. Abschalten von Antriebskomponenten nur bei Fahrzeugen mit großer träger Masse zum Einsatz gelangen, da sich das stets mit einem "Ruck" verbundene Zu- oder Abschalten sonst negativ auf das Fahrverhalten auswirkt (vergleichbar mit einer Lastwechselreaktion).

Desweiteren ergibt sich aus der Korrektur der Raddrehzahlwerte von der Anpassungselektronik die Schwierigkeit, daß zwar das Zuschalten der Antriebskomponenten richtig erfolgt, das Abschalten der Sperren jedoch unter bestimmten Betriebszuständen nicht mehr allein schlupfabhängig vorgenommen werden kann; denn bei voll zugeschalteter Sperre verhindert diese ja Drehzahlunterschiede der Räder, wobei es belanglos ist, ob die Drehzahlunterschiede durch unterschiedliche Abrollradien der Räder oder durch einen Verlust der Bodenhaftung hervorgerufen werden. Die (trotzdem) korrigierten Raddrehzahlwerte erschweren die Abschaltentscheidung zusätzlich.

Es ist daher Aufgabe der Erfindung, eine Anordnung zur Steuerung der Kraftübertragung auf wenigstens zwei Achsen eines Kraftfahrzeugs nach dem Oberbegriff des Anspruchs 1 zu schaffen, welche ein Reibglied zur Begrenzung eines Drehzahlausgleichs zwischen den Achsen so steuert, daß mit minimalem Aufwand an sensorisch erfaßten Betriebs- und/oder Fahrparametern und geringem meß- und steuerungstechnischem Aufwand ein in nahezu allen Fahrsituationen fahrdynamisch optimales Gesamtverhalten des Kraftfahrzeuges erreicht wird.

Die Erfindung ist durch die kennzeichnenden Merkmale des Anspruchs 1 sowie durch die unabhängigen Nebenansprüche 18 und 32 gelöst. Weitere, die Erfindung in vorteilhafter Weise ausgestaltende Merkmale sind in den Unteransprüchen enthalten.

Die Vorteile der Erfindung sind in erster Linie darin zu sehen, daß mit der Erfindung eine Anordnung zur Steuerung der Kraftübertragung auf wenigstens zwei Achsen eines Kraftfahrzeugs geschaffen ist, welche ein Reibglied zur Begrenzung eines Drehzahlausgleichs zwischen den Achsen mit minimalem Aufwand an sensorisch erfaßten Betriebs- und/oder Fahrparametern so steuert, daß ein in nahezu allen Fahrsituationen fahrdynamisch optimales Gesamtverhalten des Kraftfahrzeugs erreicht wird. Der meß- und steuerungstechnische Aufwand hierzu ist gering, da die Steuerung weitestgehend in ein Steuergerät eines Antiblockier-Bremssystems (ABS) integriert werden kann. Durch die Ansteuerung über geschwindigkeitsabhängige Toleranzbänder für Geschwindigkeitsdifferenzen zwischen den angetriebenen Achsen ergibt sich zum einen eine Beruhigung des Stellverhaltens und zum anderen ein weiches, aber ausreichend schnelles Übergangsverhalten zwischen den Zuständen der unbegrenzten Ausgleichswirkung und dem völlig eingeschränkten Drehzahlausgleich.

Weitere Vorteile ergeben sich insbesondere in Kombination mit der Anordnung nach Anspruch 18, nach der ein Grenzkriterium zur Beeinflussung der Begrenzung der Ausgleichswirkung des Mittendifferentials bei Rädern mit unterschiedlichen Abrollradien adaptiert wird. Hierdurch wird erreicht, daß zum Abschalten oder Vermindern der Begrenzung der Ausgleichswirkung keine zusätzlichen Meßwerte oder Kriterien herangezogen werden müssen. Eine Kurvenanpassung sorgt ferner dafür, daß insbesondere im unteren Geschwindigkeitsbereich auch enge Kurvenradien problemlos befahren werden können und ein an einer Achse auftretender, unzulässig hoher Schlupf richtig erkannt wird.

Die Erfindung ist anhand von in den Zeichnungen dargestellten Beispielen näher erläutert.
Es zeigt

Fig. 1 ein Schemabild einer Antriebseinheit eines Kraftfahrzeugs,

Fig. 2 ein Blockschaltbild der Anordnung,

Fig. 3 ein Fahrgeschwindigkeits-Geschwindigkeitslängsdifferenz-Diagramm mit Toleranzbändern,

Fig. 4 ein Flußdiagramm eines Programmoduls,

Fig. 5 ein Diagramm nach Fig. 3, jedoch für Fahrzeugreifen mit unterschiedlichen Abrollradien,

Fig. 6 ein Diagramm nach Fig. 3, jedoch mit adaptierten Toleranbändern,

Fig. 7 ein Diagramm nach Fig. 3, jedoch für Kurvenfahrt,

Fig. 8 ein relative Gechwindigkeitsquerdifferenz-Geschwindigkeitslängsdifferenz-Diagramm,

Fig. 9 ein Flußdiagramm eines Adaptionsablaufs,

Fig. 10 ein Flußdiagramm zur Prüfung von Bedingungen für die Adaption und ein Notprogramm,

Fig. 11 ein Flußdiagramm zur Bildung eines gleitenden Mittelwerts,

Fig. 12 ein Flußdiagramm zur Bestimmung eines Korrekturwerts,

Fig. 13 ein Flußdiagramm für eine Kurvenkorrektur.

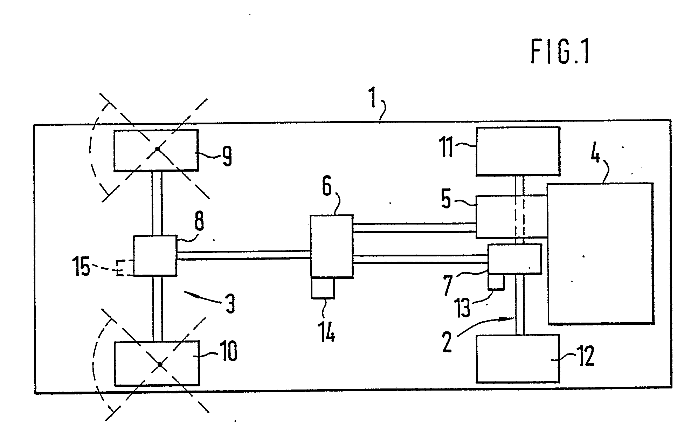

In Fig. 1 ist mit 1 ein allradgetriebenes Kraftfahrzeug mit einer ersten angetriebenen Achse 2 (Hinterachse) und einer zweiten angetriebenen Achse 3 (Vorderachse) bezeichnet; z. B. im Bereich der ersten Achse 2, hier und in nicht notwendiger Weise im Heckbereich des Kraftfahrzeugs 1 ist eine Brennkraftmaschine 4 angeordnet, die über eine Kupplungs-Getriebe-Einheit 5 und ein Mittendifferential 6 mit einer steuerbaren, vorzugsweise elektro-hydraulisch betätigten Differentialbremse zur Begrenzung der Ausgleichswirkung ein vorzugsweise kontinuierlich in seiner Ausgleichswirkung begrenz- bzw. steuerbares Querdifferential 7 der ersten Achse 2 und ein Differential 8 der zweiten Achse 3 antreibt. Dieses ist in der Regel als übliches Differentialgetriebe ausgeführt; es kann aber auch ein selbstsperrendes oder kontinuierlich in seiner Ausgleichswirkung begrenzbzw. steuerbares Differentialgetriebe sein. Räder 9, 10 an der zweiten Achse 3 sind lenkbar ausgeführt, während Räder 11, 12 der ersten Achse nicht lenkbar sind. Stellglieder 13, 14 zur Steuerung der Begrenzung der Ausgleichswirkung des Querdifferentials 7 und des Mittendifferentials 6 sind lediglich symbolisch eingezeichnet, ebenso ein gestrichelt eingezeichnetes Stellglied 15 am Differential 8 der zweiten Achse 3, das nur im Falle eines kontinuierlich steuerbaren Differentials benötigt wird; die Stellglieder können an den Aggregaten angeflanscht, ganz oder teilweise in diese integriert oder wenigstens teilweise außerhalb dieser angeordnet und mit diesen mechanisch, hydraulisch, pneumatisch oder elektrisch verbunden sein.

Die Anordnung kann selbstverständlich auch bei Allradantriebssystemen mit steuerbarer Längskupplung Anwendung finden, wie sie beispielsweise aus der DE-PS 36 08 059 bekannt sind.

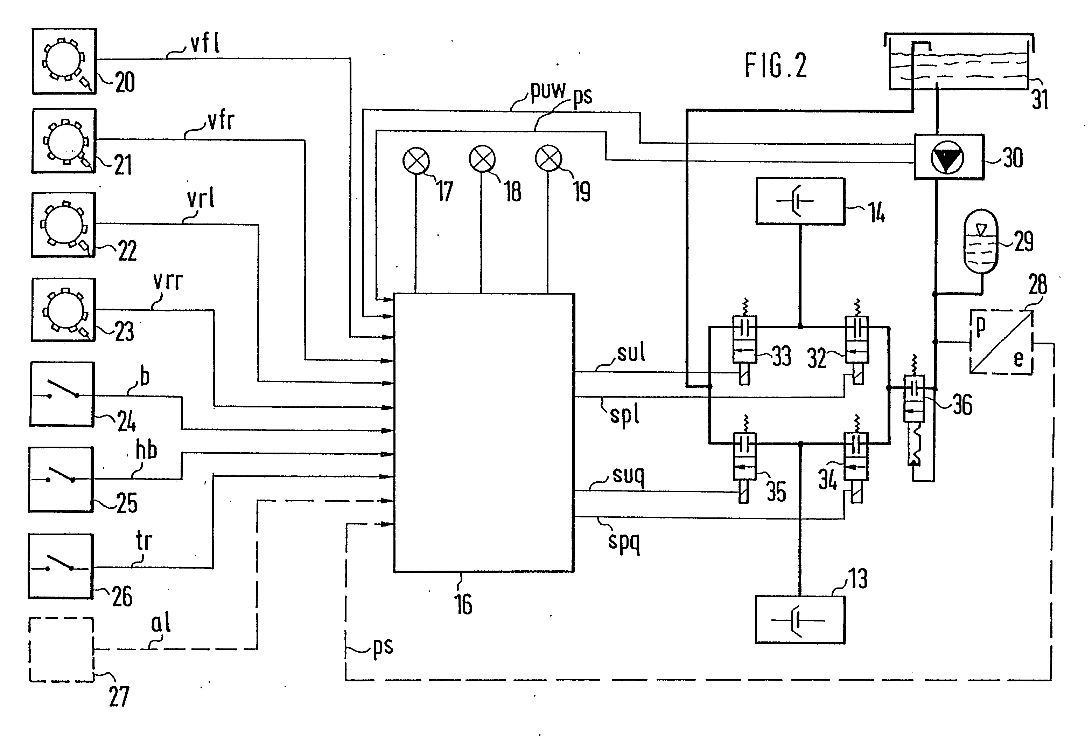

Das in Fig. 2 gezeigte Steuergerät 16 mit seinen Ein- und Ausgangsgrößen stellt eine Konfiguration dar, bei der außer dem Stellglied 14 des Mittendifferentials 6 auch noch das Stellglied 13 des Querdifferential 7 angesteuert wird. Von den angeschlossenen Sensoren reicht bereits eine bestimmte Anzahl aus; sie können gegebenenfalls durch gestrichelt gezeichnete Sensoren ergänzt werden. Eine Ansteuerung des Stellglieds 15 ist nicht gezeigt und entspricht derjenigen des Stellglieds 13.

Das Steuergerät 16 ist dabei bevorzugt auf der Basis eines an sich bekannten Mikrorechnersystems (z.B. Intel 8096) aufgebaut und kann mit einem Steuergerät eines Antiblockierbremssystems (ABS) oder eines Antriebsschlupfregelungssystems (ASR) baulich vereinigt oder in wenigstens einem dieser Systeme integriert oder über ein Bussystem verbunden sein. Der Aufbau des Steuergeräts entspricht einer üblichen Mikrorechnerkonfiguration mit Zentraleinheit, flüchtigen und nichtflüchtigen Speichern (RAM, ROM, EPROM, EEPROM), Eingangs- und Ausgangsbausteine, Zeitgebern usw.; daher wird auf den Aufbau nicht näher eingegangen.

An das Steuergerät 16 angeschlossen sind ferner Anzeigeleuchten 17, 18 und 19, die im Armaturenbrettbereich des Kraftfahrzeugs angeordnet sind und einem Fahrer Informationen über einen augenblicklichen Zustand der Anordnung anzeigen, z. B., welche Differentialbremse angesteuert ist (Mittendifferential: Anzeigeleuchte 17; Querdifferential: Anzeigeleuchte 18); ebenso können mögliche Fehler in der Anordnung angezeigt werden Anzeigeleuchte 19). Das Wort 'sensorisch' ist nicht unbedingt nur im eventuellen alleinigen Erfassen einer Meßgröße oder in einem Umwandeln der Meßgröße in andere physikalische Größe zu sehen, es kann auch eine Verarbeitung oder Vorverarbeitung einer oder mehrerer erfaßter Größen bedeuten.

Von den den Rädern 10 und 9 zugeordneten Gebern 20 und 21 sowie den den Rädern 12 und 11 zugeordneten Gebern 22 und 23 erhält die Steuereinheit 16 Signale vfl, vfr, vrl und vrr, die den Geschwindigkeiten dieser Räder an zweiter und erster Achse 3, 2 entsprechen oder von der Steuereinheit 16 in der Radgeschwindigkeit entsprechende Signale oder Werte umgesetzt werden.

Diese Signale werden auch für ein ABS benötigt, so daß ihre Signalerfassung bei Fahrzeugen, die mit einem derartigen System ausgerüstet sind, auch gemeinsam erfolgen kann, d.h. sie werden von einem der beiden Systeme erfaßt und dem anderen zur Verfügung gestellt.

Das Steuergerät 16 erhält ferner noch Signale b, hb, tr von einem Bremslichtschalter 24, von einem Handbremsschalter 25 sowie von einem Traktionsschalter 26, mit dem eine vollständige Sperrung des Mittendifferentials 6 und/oder des Querdifferentials 7 angesteuert werden kann.

Als zusätzliche Eingangsgrößen können noch Signale al, ps von einem Längsbeschleunigungssensor oder -schalter 27 und einem Drucksensor 28, welcher einen Druck ps in einem Hydraulikspeicher 29 abtastet, erfaßt werden sowie ein Zustand (Überwachungssignal puw) eines Pumpenaggregats 30, das Druckmittel aus einem Vorratsgefäß (Sumpf) 31 entnimmt und damit den Hydraulikspeicher auf einen bestimmten Druckniveaubereich auflädt und ein Sicherheitsdrucksignal ps, das geliefert wird, sofern der Druck im Speicher 29 einen unteren Wert unterschreitet. Das Pumpenaggregat enthält einen eigenen Drucksteuerkreis, welcher dieses so steuert, daß der Speicher auf einen bestimmten Druckniveaubereich aufgeladen wird. Unterschreitet der Druck den Sicherheitsdruck, so wird die gesamte Vorrichtung drucklos gemacht und die Anzeigeleuchte 19 angesteuert.

Das Steuergerät 16 steuert über eine Leitung spl ein erstes Druckaufbauventil 32, das das Stellglied 14 für die Differentialbremse des Mittendifferentials 6 mit dem Druckspeicher 29 verbindet, an. Über eine Leitung sul wird ein erstes Druckabbauventil 33 angesteuert; dieses verbindet das Stellglied 14 mit dem Sumpf 31.

Desgleichen liefert das Steuergerät 16 über eine Ausgangsleitung spq Steuersignale für ein zweites Druckaufbauventil 34, das das Stellglied 13 des Querdifferentials 7 mit dem Druckspeicher 29 verbindet. Über eine Leitung suq wird ein zweites Druckabbauventil 35 angesteuert, welches das Stellglied 13 mit dem Sumpf verbinden kann. Schließlich ist noch in die Druckmittelleitung zwischen dem Speicher 29 und die Druckaufbauventile 32, 34 ein Sicherheitsventil 36 geschaltet.

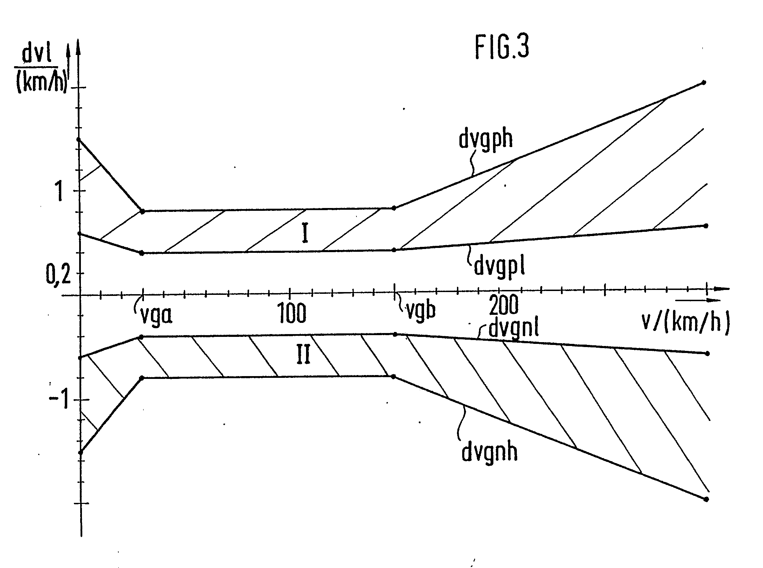

Fig. 3 schließlich zeigt ein Diagramm, auf welchem Steuerkriterien dargestellt sind, nach denen das Steuergerät 16 ein Druckniveau im Stellglied 14 des Mittendifferentials 6 steuert.

Über der Abszisse ist die Fahrgeschwindigkeit v in km/h aufgetragen; diese entspricht der wahren tangentialen Fahrzeuggeschwindigkeit über Grund und wird bevorzugt von dem am langsamsten laufenden Rad abgenommen, kann jedoch gegebenenfalls auch nach anderen bekannten Kriterien aus den Raddrehzahlsignalen bzw. -geschwindigkeiten vfl, vfr, vrl, vrr abgeleitet werden.

Auf der Ordinate ist eine Geschwindigkeitslängsdifferenz dvl in km/h aufgetragen. Diese wird aus der Differenz $dvl = vr - vf$ der Drehgeschwindigkeiten der Achsen bzw. der mittleren Geschwindigkeiten der Räder an der ersten Achse (hier: die Hinterachse) $vr = (vrl + vrr)/2$ und der Räder an der zweiten Achse (Vorderachse) $vf = (vfl + vfr)/2$ ermittelt.

Im Diagramm sind ein erstes Toleranzband I im Bereich positiver Geschwindigkeitslängsdifferenzen $dvl > 0$ und ein zweites Toleranzband II im Bereich negativer Geschwindigkeitslängsdifferenzen $dvl < 0$ angeordnet. Es ist hierbei angenommen, daß die Abrollradien aller 4 Räder gleich sind, da sonst selbst bei schlupflos oder mit gleichem Radschlupf $SRfr = (vfr - v)/v = SRfl = (vfl - v)/v = SRrl(vrl - v)/v = SRrr(vrr - v)/v$ laufenden Rädern ein annähernd linear mit der Fahrgeschwindigkeit v ansteigender Betrag einer stationären Geschwindigkeitslängsdifferenz $dvl|_{stat} = Sgeo \cdot v$ auftritt, der möglicherweise die Toleranzbänder schneiden und so zu einem unerwünschten oder unnötigen Steuereinfluß führen kann. Sind die Abrollradien der Räder achsweise und die Ausgangsübersetzungen des Mittendifferentials bewußt unterschiedlich gewählt, so sind die Toleranzbänder so zu verschieben, daß sie wiederum annähernd symmetrisch um die stationäre Geschwindigkeitslängsdifferenz $dvl|_{stat}$ herum liegen.

Das erste Toleranzband setzt sich nun aus einer Obergrenze dvgph und einer Untergrenze dvgpl, die jeweils geschwindigkeitsabhängig sind, zusammen:

- Überschreitet die Geschwindigkeitslängsdifferenz dvl die Obergrenze dvgph, so erfolgt eine Erhöhung der Begrenzung des Drehzahlausgleichs, indem das erste Druckaufbauventil 32 angesteuert wird;
- liegt die Geschwindigkeitslängsdifferenz dvl innerhalb des ersten Toleranzbands I, d.h., zwischen der Obergrenze dvgph und deren Untergrenze dvgpl, so wird der augenblickliche Druck gehalten, d.h., weder das erste Druckaufbauventil 32 noch das erste Druckabbauventil 33 erhält neue Ansteuersignale;
- liegt die Geschwindigkeitslängsdifferenz dvl zwischen beiden Toleranzbändern, so wird das Druckabbauventil 33 angesteuert (Verringern der Begrenzung der Ausgleichswirkung);
- liegt die Geschwindigkeitslängsdifferenz dvl innerhalb des zweiten Toleranzbandes II, d.h., zwischen deren Obergrenze dvgnl und deren Untergrenze dvgnh, so werden wiederum keine neuen Ansteuersignale an die Ventile 32, 33 ausgegeben;
- unterschreitet dagegen die Geschwindigkeitslängsdifferenz die Untergrenze dvgnh des zweiten Toleranzbandes II, so wird wiederum das erste Druckaufbauventil 32 angesteuert.

Die Toleranzbänder I, II bzw. deren Obergrenzen dvgph, dvgnl und Untergrenzen dvgpl, dvgnh sind fahrgeschwindigkeitsabhängig. Hierbei ist das im Bereich positiver Geschwindigkeitslängsdifferenzen dvl > 0 angesiedelte erste Toleranzband I (bzw. seine Ober- und Untergrenze dvgph, dvgpl) mit wachsender Fahrgeschwindigkeit v vorzugsweise

- in einem unteren Geschwindigkeitsbereich $0 < v \leq vga$ abfallend (oder konstant),
- in einem mittleren Geschwindigkeitsbereich $vga < v \leq vgb$ konstant und
- in einem oberen Geschwindigkeitsbereich $v > vgb$ ansteigend.

Das im Bereich negativer Geschwindigkeitslängsdifferenzen dvl<0 angesiedelte zweite Toleranzband II (bzw. dessen Ober- und Untergrenzen dvgl, dvgnh ist mit wachsender Fahrgeschwindigkeit v vorzugsweise

- in einem unteren Geschwindigkeitsbereich $0 < v \leq vga$ ansteigend oder konstant,
- in einem mittleren Geschwindigkeitsbereich $vga < v \leq vgb$ konstant und
- in einem oberen Geschwindigkeitsbereich $v > vgb$ abfallend.

Die in der Fig. 3 angegebenen Werte sind hierbei lediglich als Richtwerte anzusehen. Es hat sich jedoch für eine gute Wirksamkeit der Anordnung als sinnvoll erwiesen, die Toleranzbänder in einem derart niedrigen Bereich zu legen, so daß das Fahrverhalten eines Fahrzeuges mit Allradantrieb entschieden verbessert werden konnte. Die Obergrenze dvgph des ersten Toleranzbandes I und die Untergrenze dvgnh des zweiten Toleranzbandes II entsprechen am Ende des mittleren Bereichs (bei ca. 100 km/h bis 150 km/h) einem Wert der Geschwindigkeitslängsdifferenz dvl, bezogen auf die Fahrgeschwindigkeit v oder die Drehgeschwindigkeit einer Achse, (Achsschlupf $S = (vr-vf)/vf$), von bspw. 1%. Dieser Wert kann noch unterhalb einem bei schlupflos bzw. mit gleichem Radschlupf an allen Rädern $SRfr = SRfl = SRrr = SRrl$ gegenüber der Fahrbahn laufenden Fahrzeug durch übliche Fertigungstoleranzen von Fahrzeugreifen entstehenden geometrischen Achsschlupfwert $Sgeo = (vr-vf)/vf|_{SRfl = SRrl = SRrr}$ liegen: Sgeo entspricht hierbei der Steigung der Geschwindigkeitslängsdifferenz $dvl|_{stat}$. Da letztere insbesondere im angesprochenen Geschwindigkeitsbereich die Toleranzbänder schneiden kann, ist es sinnvoll, die Anordnung mit einer Adaptionseinrichtung zu versehen, wie sie weiter unten noch beschrieben wird. Diese Adaptionseinrichtung führt zu einem Ausgleich der stationären Geschwindigkeitslängsdifferenz $dvl|_{stat}$ bzw. des geometrischen Achsschlupfwerts Sgeo.

Im oberen Geschwindigkeitsbereich $v > vgb$ entspricht die Steigung der Toleranzbandgrenze wenigstens annähernd der Zunahme der Geschwindigkeitslängsdifferenz dvl entsprechend dem o. g. gewählten Wert des Achsschlupfs S. Die Steigung kann jedoch auch berücksichtigen, daß die aus den Signalen der Geschwindigkeitsgeber 20 bis 23 berechneten Geschwindigkeiten bei höhren Fahrgeschwindigkeiten zunehmenden Schwankungen unterliegen.

Im unteren Geschwindigkeitsbereich $0 < v \leq vga$ wird vorzugsweise die Untergrenze dvgnh des unteren Toleranzbandes II und/oder die Obergrenze dvgph des oberen Toleranzbandes I so ausgelegt, daß sie einer Einhüllenden für die bei Kurvenfahrt des Kraftfahrzeuges auftretenden fahrgeschwindigkeitsabhängigen Geschwindigkeitslängsdifferenzen dvl entspricht.

Die Untergrenze dvgnh / die Obergrenze dvgph kann jedoch auch höher/niedriger ausgelegt werden; dann ist jedoch eine Kurvenkorrektureinrichtung vorzusehen (siehe weiter unten), welche die fahrgeschwindigkeitsabhängigen Geschwindigkeitslängsdifferenzen bei Kurvenfahrt entsprechend berücksichtigt.

Die Druckaufbau und -abbauventile 32 bis 35 werden über impulsförmige Signale (Pulsreihen) vom Steuergerät angesteuert. Die impulsförmigen Signale sind so ausgelegt, daß sich die Änderungsgeschwindigkeit, mit der sich die Begrenzung des Drehzahlausgleichs einstellt, steuerbar (und endlich) ist.

Diese Änderungsgeschwindigkeit ist vorteilhaft für die Erhöhung und Verminderung der Begrenzung unterschiedlich. Sie kann ebenso von der Höhe des Betrags der Geschwindigkeitslängsdifferenz |vr-vf| und/oder dessen oder deren zeitlichen Änderung d|vr-vf|/dt, d(vr-vf)dt und/oder vom Zustand von Hilfsenergieträgern (z. B. Speicherdruck) und/oder vom Druck im Stellglied und/oder einer Vorgeschichte einer Ansteuerung des Stellglieds abhängig sein.

Eine Pulsreihe zur Ansteuerung des ersten Druckaufbauventils 32 weist beispielsweise folgenden zeitlichen Verlauf auf (ein Pluszeichen ( + ) hinter der Zeitangabe kennzeichnet einen Einschaltimpuls (Ventil öffnen), ein Minuszeichen (-) eine Impulspause (keine Ansteuerung)):
4ms + 20ms- 4ms + 20ms- 8ms + 20ms- 8ms + 20ms- 8ms + 20ms- l2ms + 20ms- l2ms + 20ms- l2ms + 20ms- 36ms + .

Eine Pulsreihe zur Ansteuerung des ersten Druckabbauventils 33 hat dagegen folgenden Verlauf:
4ms + 240ms- 4ms + 240ms- 4ms + 180ms- 4ms + 180ms- 8ms + 180ms- 8ms + 180ms- l2ms + 180ms- l2ms + 180ms- l2ms + 60ms- 36ms + .

War das System vorher drucklos (vorheriges Absetzen einer vollständigen Druckabbauimpulsreihe) so wird einer angeforderten Druckaufbau-Impulsreihe ein Einschaltimpuls verlängerter Impulsdauer vorausgeschickt, welcher zusätzlich vom Speicherdruck abhängig sein kann (wozu selbstverständlich die Speicherdruckerfassung (Sensor 28) notwendig ist). Der Impuls verlängerter Impulsdauer dient dazu, die noch leeren (drucklosen) Leitungen zum Stellglied 14 und dieses selbst zu füllen (Verringerung der Totzeit der Anordnung). Beispiele für Einschaltimpulse:
Speicherdruck 130 bar: 35ms + 20ms-
Speicherdruck 150 bar: 30ms + 20ms-
Speicherdruck 170 bar: 25ms + 20ms-

Ebenso kann zur Vermeidung von Regelschwingungen ein in endlicher Zeit auf eine Anforderung zur Erhöhung der Begrenzung des Drehzahlausgleichs folgende Anforderung zum Halten oder Verminderung der Begrenzung zeitlich verzögert und/oder unterdrückt werden.

Eine Aufbauimpulsreihe vom Rechner wird unterbrochen und ein aktueller Puls ausgegeben, wenn die Geschwindigkeitslängsdifferenz dvl in eines der Toleranzbänder eintritt. Sie wird fortgesetzt, wenn dvl wiederum das erste Toleranzband I über- bzw. das zweite Toleranzband II unterschreitet.

Tritt dvl während des Absetzens einer Aufbauimpulsreihe in den Bereich zwischen den Toleranzbändern ein (Anforderung zum Druckabbau) und verharrt dort, so wird erst nach Verstreichen einer bestimmten Zeitdauer eine Druckabbauimpulsreihe abgesetzt.

Die kürzeste Impulsdauer (4msec) entspricht einer Ansteuerzeit, die die Ventile gerade benötigen, um sicher zu öffnen. Es ist vorteilhaft, wenn die Programmzykluszeit eines weiter unten noch beschriebenen Ansteuerprogramms der Zeitdauer dieser Ansteuerzeit entspricht oder die Ansteuerzeit der Ventile ein ganzzahliges Vielfaches der Programmzykluszeit ist.

Erhält das Steuergerät zusätzliche Signale b,hb vom Bremslichtschalter 24 und/oder dem ABS und/oder dem Handbremsschalter 25, so wird das Stellglied 14 derart angesteuert, daß bei Betätigen der Betriebsbremse ein langsamer und bei Wirksamwerden des ABS oder bei Betätigen der Handbremse ein schneller Druckabbau erfolgt.

Ebenso kann bei zusätzlicher Erfassung des Drucks im Stellglied das Verhältnis der Zeitdauer von Einschaltimpulsen zu Pulspausen mit steigendem Druck vermindert bzw. mit fallendem Druck erhöht werden.

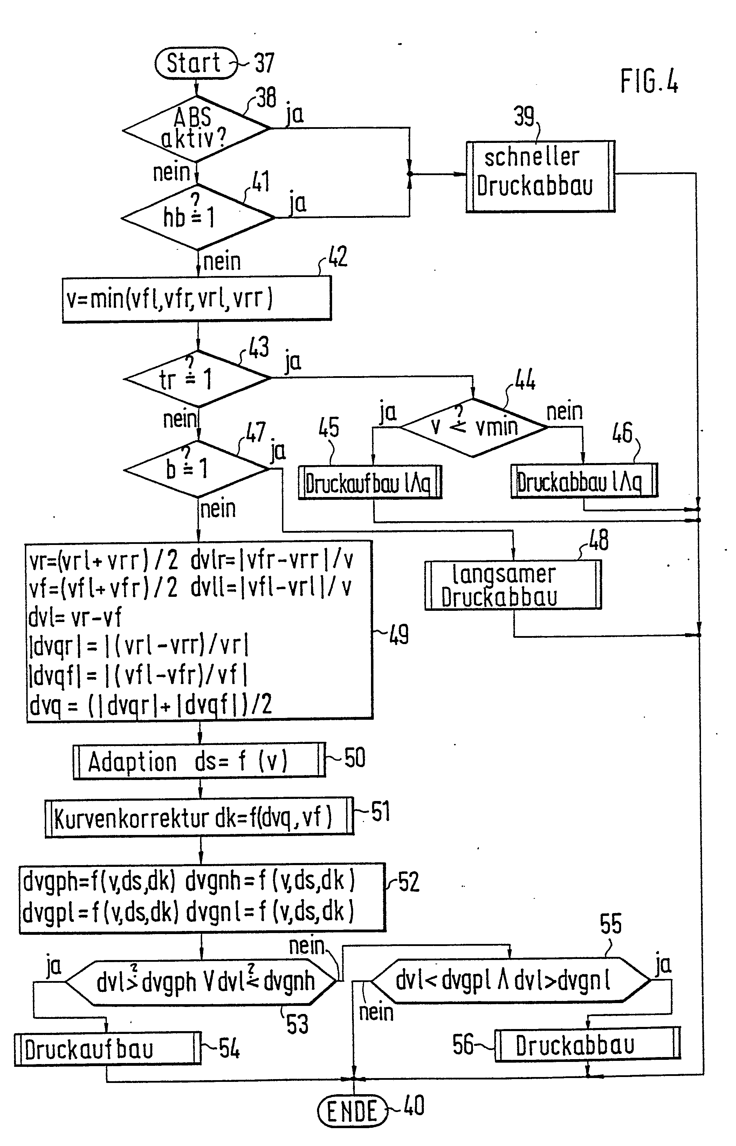

In Fig. 4 ist ein Flußdiagramm für den Ablauf eines Programmmoduls für das Steuergerät 16 gezeigt, das vorzugsweise innerhalb eines Programms eines ABS-Steuergeräts oder eines (nicht gezeigten) Hauptprogramms eingebunden wird. Diese beinhalten u. a. eine Systeminitialisierung, sowie die zyklische Abarbeitung einer Überprüfungsroutine für alle an das Steuergerät 16 angeschlossene Elemente, einer Erfassungs- und Aufbereitungsroutine für die Sensorsignale mit der Bestimmung der Radgeschwindigkeiten und -beschleunigungen und des Programmoduls nach Fig. 4.

Nach einem Programmstart 37 wird zunächst abgefragt, 38, ob das ABS aktiv ist. Wenn ja, wird ein Unterprogramm 39 aufgerufen, das Steuerimpulse sul an das Druckabbauventil 33 für einen schnellen Druckabbau im Stellglied 14 abgibt, und zum Programmende 40 fortgefahren; dort erfolgt entweder ein Rücksprung ins ABS-Programm oder ins Hauptprogramm.

Ist die Abfrage 38 negativ, so wird geprüft, ob die Handbremse betätigt ist (Signal hb aktiv) 41. Wenn ja, wird zum Programmschritt 39 fortgefahren, wenn nein, die Fahrgeschwindigkeit v aus dem kleinsten der Geschwindigkeitssignale vfl, vfr, vrl, vrr der Räder aller Achsen ermittelt, 42. Es wird geprüft, ob der Traktionsschalter betätigt wurde (Signal tr aktiv), 43; wenn ja, wird abgefragt, ob v<vmin ist, 44; ist dies erfüllt, wird ein Unterprogramm 45 zum Ansteuern des Druckaufbaus in den Stellgliedern 13, 14 aufgerufen und zum Programmende 40 fortgefahren, wenn nicht, wird ein Unterprogramm 46 zum Ansteuern eines Druckabbaus in den Stellgliedern 13, 14 aufgerufen und anschließend zum Programmende 40 weiterverzweigt.

Ist die Abfrage 43 negativ, so wird in einer weiteren Abfrage 47 geprüft, ob die Betriebsbremse des Kraftfahrzeugs betätigt ist (Signal b aktiv): Wenn ja, wird ein Unterprogramm 48 zum langsamen Druckabbau im Stellglied 14 aufgerufen und nach dessen Ablauf zum Programmende 40 weiterverzweigt.

Ist die Abfrage 47 negativ, so werden die folgenden Werte bestimmt, 49:
- Mittlere Geschwindigkeit vr der Räder an der ersten (Hinter-)Achse 2,
- Mittlere Geschwindigkeit vf der Räder an der zweiten (Vorder-)Achse 3,
- die Geschwindigkeitslängsdifferenz dvl,
- Beträge einer relativen Geschwindigkeitsquerdifferenz an der ersten Achse $|dvqr| = |(vrl-vrr)/vr|$
- und an einer zweiten Achse $|dvql| = |(vfl-vfr)/vf|$ und
- eine relative Geschwindigkeitsquerdifferenz $dvq = (|dvqr| + |dvql|)/2)$
- eine relative Geschwindigkeitslängsdifferenz der Räder einer Fahrzeugseite $dvlr = |vfr-vrr|/v$
- eine relative Geschwindigkeitslängsdifferenz der Räder einer zweiten Fahrzeugseite $dvll = |vfl-vrl|/v$.

In den nächsten beiden Programmschritten werden (sofern vorhanden) ,später noch zu beschreibende Unterprogramme zur Adaption (50) der Anordnung am Reifen mit unterschiedlichen Abrollradien und zur Kurvenkorrektur 51 aufgerufen. Anschließend werden die Grenzkriterien (Grenzen der Toleranzbänder) aus der Fahrgeschwindigkeit v, und, sofern die Programmschritte 50, 51 ausgeführt werden, zusätzlich aus der Adaption $ds = f(v)$ und der Kurvenkorrektur $dk = f(dvq, vf)$ ermittelt, 52.

Danach wird abgefragt, ob die Geschwindigkeitslängsdifferenz dvl oberhalb der Obergrenze dvgph oder unterhalb der Untergrenze dvgnh liegt, 53; wenn ja, wird ein Unterprogramm Druckaufbau 54, aufgerufen, und das Programm beendet, 40. Wenn nein, wird abgefragt, 55, ob die Geschwindigkeitslängsdifferenz zwischen beiden Toleranzbändern I, II liegt; wenn ja, wird ein Unterprogramm 56 zum Druckabbau aufgerufen und das Programmodul beendet, 40, wenn nein, wird das Programm direkt abgeschlossen.

Auf die Unterprogramme 39, 45, 46, 48, 54, 56 wird nicht näher eingegangen. Diese geben pro Programmdurchlauf Stück für Stück entsprechende Impulsreihen an die Ventile 32 bis 35 oder deren Treiber ab und überprüfen die weiter oben beschriebenen Sonderfunktionen (Vermeidung von Regelschwingungen).

Ein gewisser Zielkonflikt ergibt sich allerdings mit allen Steuerungsanordnungen und Verfahren, bei denen Grenzkriterien, wie z. B. Drehzahl- oder Schlupfschwellen der Toleranzbänder als Zu- und Abschaltkriterium bzw. Zu- und Absteuerkriterium für Reibglieder zur Begrenzung eines Drehzahlausgleichs herangezogen werden.

Einerseits müssen die Grenzkriterien für eine gute, lastwechselfreie Wirksamkeit sehr niedrig liegen (Zuschaltschwelle, beispielsweise bei einem Verhältnis von Geschwindigkeitslängsdifferenz zur Fahrgeschwindigkeit oder bei einem Achsschlupfwert von ca. 1 %).

Nun liegen jedoch aber andererseits die Fertigungstoleranzen von Fahrzeugreifen z. T. über diesem Wert, insbesondere dann, wenn die Achsen des Fahrzeugs mit Reifen unterschiedlichen Reifenformats (Reifenbreite) ausgestattet sind. Weitere Einflußgrößen können der Reifenluftdruck, der Reifenverschleiß (der in der Regel achsabhängig verschieden ist) und die Bestückung der Reifen einer Achse mit Schneeketten oder der Ersatz eines Reifens mit einem Ersatz-(not-)rad sein, oder ein Beladungszustand des Kraftfahrzeugs oder befahrene Steigungen und Gefälle.

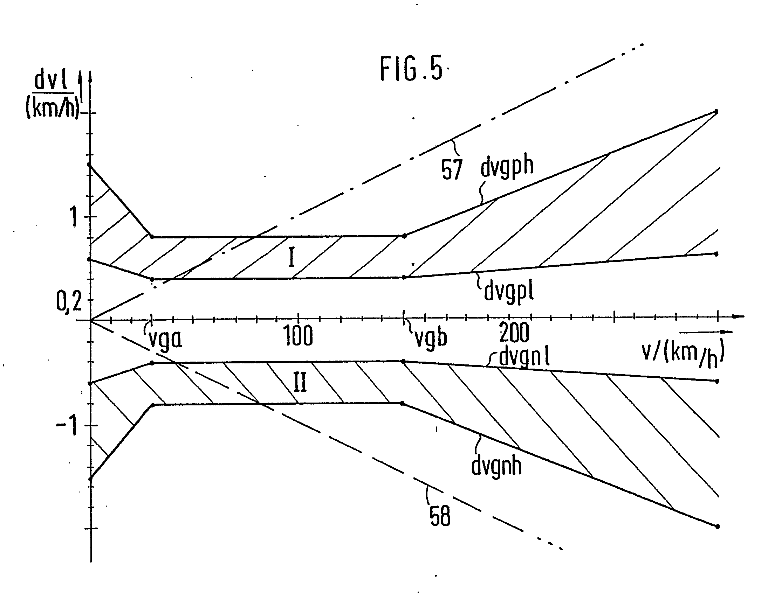

Diese Situation ist anhand einer strichpunktierten Linie 57 in der Fig. 5 deutlich gemacht. Diese Linie 57 entspricht einer stationären Geschwindigkeitslängsdifferenz $dvl|_{stat} = Sgeo \cdot v$, welche entsteht, wenn ein Abrollumfang der Räder einer ersten Achse lediglich um 1 % kleiner als ein Abrollumfang der Räder einer zweiten Achse ist; die Linie 57 steigt daher linear mit der Fahrzeuggeschwindigkeit v an. In dem gezeigten Fall würde bereits ab einer Fahrgeschwindigkeit von 80 km/h ein Grenzkriterium dvgph zur Zuschaltung bzw. Zusteuerung des Reibglieds bleibend überschritten, ohne daß hierbei ein nennenswerter Radschlupf der Räder einer Achse gegenüber der Fahrbahn oder ein Unterschied im Radschlupf zwischen den Rädern auftritt (SRfr = SRfl = SRrr = SRrl)!

In der DE-OS 35 05 455 wurde deshalb schon vorgeschlagen, einer Elektronikeinheit zur Ansteuerung von Kupplungen oder Sperren von Ausgleichsgetrieben mit einer adaptiv arbeitenden Anpassungselektronik zu versehen, welche Meßwerte der Raddrehzahlen (bzw. Geschwindigkeiten) entsprechend der im Normalfall auftretenden Abweichungen kompensiert.

Dies bewirkt zwar, daß die Linie 57 mit der Geschwindigkeitsachse zusammenfällt, so daß eine Zuschaltung einer Kupplung oder Sperre tatsächlich erst dann erfolgt, wenn tatsächlich erhöhter Radschlupf an einer Achse auftritt. Unter bestimmten Umständen ergibt sich jedoch mit einem derartigen System zur Adaption bzw. Kompensation der Raddrehzahlmeßwerte Schwierigkeiten: Es werden zwar die Zuschaltwerte richtig erkannt und beispielsweise eine Sperre richtig zugeschaltet. Die geschlossene Sperre des Ausgleichsgetriebes verhindert jedoch, daß sich deren Ein- und Ausgangswelle (gleiche Übersetzungen vorausgesetzt) mit unterschiedlichen Drehzahlen drehen.

Da die adaptive Anpassungselektronik die Meßwerte weiterhin um denselben geschwindigkeitsabhängigen Differenzbetrag kompensiert, verlaufen nun die Geschwindigkeitslängsdifferenzwerte dvl längs der Linie 58, so daß oberhalb einer bestimmten Fahrgeschwindigkeit v (80 km/h) das für den negativen Bereich von Geschwindigkeitslängsdifferenzen maßgebliche Zuschaltgrenzkriterium nicht mehr überschritten wird. Die Sperre bleibt somit zugeschaltet, obwohl gar kein unzulässig hoher Radschlupf an einer Achse mehr vorliegen muß. Ohne zusätliche (kritische und radschlupfabhängige) Abschaltkriterien führt dies jedoch zu starken Verspannungen im Antriebsstrang und erhöhtem Verschleiß an den Reibgliedern und an den Fahrzeugreifen.

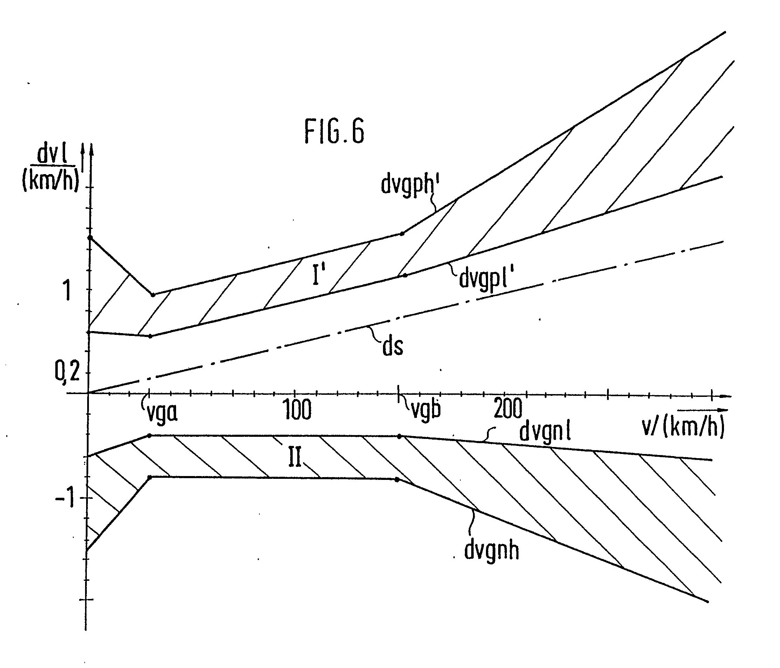

Gemäß der Erfindung werden nun nicht die Raddrehzahlmeßwerte, sondern wenigstens ein (fahrgeschwindigkeitsabhängiges) Grenzkriterium dvg = f(v) adaptiert. Dies ist anhand von Fig. 6 gezeigt: Die strichpunktierte Linie ds entspricht gerade wieder der bei annähernd schlupflos oder mit demselben Schlupf gegenüber der Fahrbahn laufenden Rädern aufgrund unterschiedlicher Abrollradien entstehenden stationären Geschwindigkeitslängsdifferenz dvl|$_{stat}$, wobei hier als Beispiel eine Verhältniszahl von dvl|$_{stat}$/v*100% von 1/2 % angenommen ist.

Die strichpunktierte Linie ds gibt nun genau den linear von der Fahrgeschwindigkeit abhängigen Korrekturwert an, um den das Grenzkriterium (in gegebenem Fall das Toleranzband I nach Fig. 3) verschoben (adaptiert) wird (additiv), so daß sich das adaptierte Toleranzband I' ergibt.

In der Regel braucht nur dasjenige Grenzkriterium verschoben werden, das im gleichen Quadranten verläuft wie der Korrekturwert ds. Im gezeigten Fall ist es das noch oben verschobene Toleranzband I; verläuft der Korrekturwert ds im 4. Quadranten des dvl/v-Diagramms (ds negativ), so wird das Toleranzband II nach unten korrigiert.

Die Funktionsweise ist nun dergestalt, daß bei abgeschaltetem oder abgesteuertem Reibglied und schlupflos oder mit gleichem Radschlupf laufenden Rädern sich die Werte für die Geschwindigkeitslängsdifferenzen um die Linie ds herum einpendeln. Tritt beispielsweise ein zusätzlicher (positiver) Geschwindigkeitslängsdifferenz-Betrag auf, so daß die Obergrenze dvgph' des ersten Toleranzbandes I' überschritten wird, so wird das Reibglied zugeschaltet bzw. zugesteuert. Das den Drehzahlausgleich begrenzende Reibglied zieht nun mit zunehmender Ansteuerung die Geschwindigkeitslängsdifferenz dvl in Richtung der v-Achse herunter und wird bei Eintritt von dvl in das adaptierte erste Toleranzband I' nicht weiter angesteuert und bei Unterschreiten der Untergrenze dvgpl' wieder abgeschaltet oder abgesteuert.

Zu bemerken bleibt, daß die Adaption selbstverständlich auch dann funktioniert, wenn die Toleranzbänder jeweils zu einer Schaltlinie zusammenschrumpfen und das Reibglied im Schaltmodus betrieben wird; allerdings ist dann mit einer gewissen 'Schaltunruhe' zu rechnen. Es ist daher sinnvoll, Toleranzbänder einer bestimmten Breite zuzulassen und/oder die Ab- und Zusteuerung mit endlicher Geschwindigkeit vorzunehmen. Zusätzliche Ausschaltkriterien sind in der Regel nicht erforderlich.

Die Erfassung des Korrekturwerts erfolgt bei schlupflos oder mit demselben Radschlupf laufenden Rädern. Dieser Zustand wird durch die folgenden Systemzustände nachgebildet:

- die Begrenzung des Drehzahlausgleichs ist aufgehoben,
- die Fahrzeuggeschwindigkeit (v) befindet sich innerhalb eines bestimmten Geschwindigkeitsfensters,
- der Betrag der Radbeschleunigungen (dvfl/dt, dvfr/dt, dvrl/dt und dvrr/dt) aller Räder liegt unterhalb eines bestimmten Radbeschleunigungs-Maximalwerts,
- das Kraftfahrzeug befindet sich nicht in Kurvenfahrt
- es sind keine Fahrzeugbremsen betätigt und/oder
- der Betrag einer statischen und/oder dynamischen Längsbeschleunigung (dv/dt) des Kraftfahrzeugs liegt unterhalb eines bestimmten Längsbeschleunigungs- Maximalwerts.

Der Systemzustand des sich nicht in Kurvenfahrt befindlichen Kraftfahrzeugs ergibt sich hierbei aus folgenden Kriterien:
- ein Betrag einer relativen Geschwindigkeitsquerdifferenz an beiden Achsen dvqf = |vfl-vfr|/vf, dvqr = |vrl-vrr|/vr ist jeweils jeweils kleiner als ein Geschwindigkeitsquerdifferenzwert dvqg und/oder
- ein Betrag einer relativen Geschwindigkeitslängsdifferenz dvlr = |vfr-vrr|/v und dvll = |vfl-vrl|/v der Räder jeweils einer Fahrzeugseite ist jeweils kleiner als ein Geschwindigkeitslängsdifferenz-Grenzwert dvlg.

Die Längsbeschleunigung des Kraftfahrzeugs kann mittels eines Beschleunigungssensors oder Beschleunigungsschalters ermittelt werden.

Die Bestimmung des Korrekturwerts ds und dessen Anpassung an die Veränderungen im Fahrbetrieb des Kraftfahrzeugs erfolgt in sinnvoller Weise mit endlicher Abgleichgeschwindigkeit; vorzugsweise wird der Korrekturwert ds = abgfak*v aus dem Produkt eines Abgleichfaktors (Steigung von ds) und der Fahrgeschwindigkeit v ermittelt, wobei der Abgleichfaktor abgfak selbst wiederum mittelbar oder unmittelbar und mit endlicher Abgleichgeschwindigkeit aus Werten einer auf die Fahrgeschwindigkeit v (oder vf) bezogenen Geschwindigkeitslängsdifferenz (erste temporäre Größe tmpo = vr/vf-1 bzw. tmp0 = (vr-vf)/vf oder tmp0 = (vr-vf)-

/v) zwischen den Achsen (2, 3) ermittelt wird. Die erste temporäre Größe tmpo entspricht also dem gemessenen Wert des geometrischen Achsschlupfwerts, $Sgeo = dvl|_{stat}/v$.

Die Ermittlung des Abgleichfaktors abgfak erfolgt vorteilhaft mittels gleitender Mittelwertbildung. Da größere Änderungen an den Abrollradien der Räder häufig nach Fahrzeugstillstand auftreten (Räderwechsel, Druckverluste, Auflegen von Schneeketten), ist es erforderlich, den Korrekturwert unmittelbar nach dem Starten des Kraftfahrzeugs bzw. dessen Brennkraftmaschine mit einer höheren Abgleichgeschwindigkeit zu ermitteln als während des Fahrbetriebs; er wird hierzu zunächst auf einen Wert gesetzt, welcher unmittelbar nach Abstellen des als zuletzt gültiger Wert abgespeichert wurde. Die Ermittlung des Abgleichfaktors abgfak erfolgt also mit kurzer Zeitkonstante, wobei pro Programmdurchlauf eines errechnenden Programms für einen gleitenden Mittelwert abgfakmw des Abgleichfaktors abgfak dieser aus jeweils $1/n$ eines neu ermittelten Werts zu $(n-1)/n$ eines vorher ermittelten Werts zusammengesetzt wird. Nach einer charakteristischen Anzahl von Programmdurchläufen, nach der der gleitende Mittelwert abgfakmw den neu ermittelten Korrekturwert bis auf ein bestimmtes Maß erreicht hat, wird der neu bestimmte Wert mit dem abgespeicherten Wert verglichen und nur dann mit dem neuen Wert weitergerechnet, wenn dieser betraglich größer als der alte Wert ist und/oder sein Vorzeichen gewechselt hat; ansonsten wird mit dem alten Wert weitergerechnet.

Eine weitere Sonderfunktion ergibt sich für die folgenden Fälle:

1. Wenn eine sofortige Ansteuerung des Stellglieds zur Begrenzung des Drehzahlausgleichs erfolgt bevor eine Adaption nach dem Start durchgeführt werden konnte und diese für eine vorgegebene erste Zeitspanne beibehalten wird, wird wenigstens ein Grenzkriterium $dvg = f(v)$ betragsmäßig um einen bestimmten Wert erhöht, bis wieder eine Adaption durchgeführt werden kann.

2. Wenn die erhöhte Begrenzung im Fahrbetrieb für eine vorgegebene zweite und längere Zeitspanne anliegt, wird ein Grenzkriterium $dvg = f(v)$ betragsmäßig um einen bestimmten Betrag erhöht, bis wieder eine Adaption durchgeführt werden kann.

Ein weiterer Zielkonflikt für die Auslegung der Grenzkriterien ergibt sich bei Kurvenfahrt des Kraftfahrzeugs; hierbei treten bekanntlich bei kleinen befahrenen Kurvenradien r, insbesondere im niedrigen Fahrgeschwindigkeitsbereich relativ hohe Geschwindigkeitslängsdifferenzen $dvl = vr-vf$ im negativen Bereich auf.

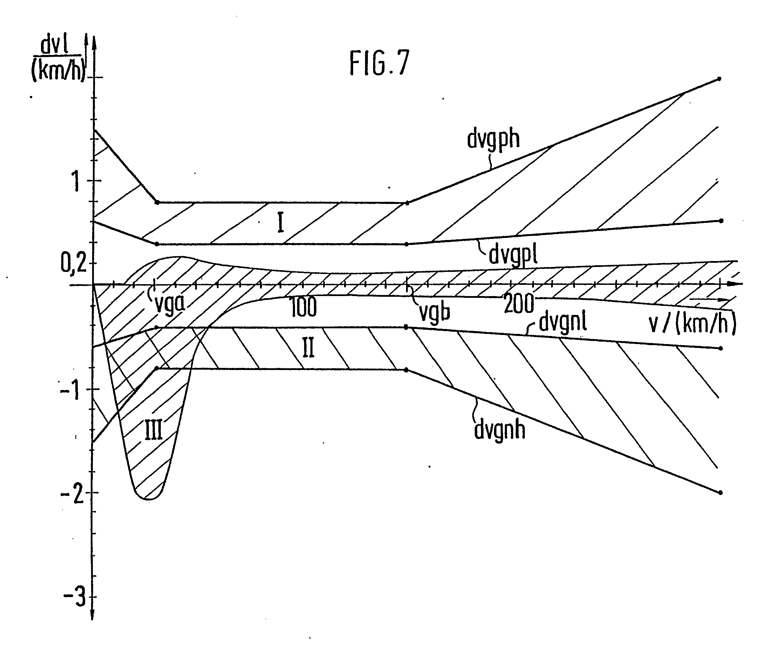

Dies ist in Fig. 7 mittels des eng schraffierten Gebiets III innerhalb des aus Fig. 3 bekannten Geschwindigkeits-Geschwindigkeitslängsdifferenz-Diagramms gezeigt. Daraus geht hervor, daß mit den gegebenen Grenzkriterien bereits aufgrund der durch die Kurvenfahrt auftretenden Geschwindigkeitslängsdifferenzen das Reibglied zur Begrenzung des Drehzahlausgleichs angesteuert werden kann (d.h., in dem Bereich des Gebiets III, welcher unterhalb der Untergrenze dvgnh des zweiten Toleranzbandes II liegt), was jedoch wegen der Behinderung der Kurvenfahrt des Kraftfahrzeugs und der Verspannungen im Antriebsstrang nicht erwünscht ist.

Man kann zwar nun die Grenzkriterien für die Ansteuerung des Reibglieds derart ausweiten, daß sie das Gebiet III mit umfassen. dvgnh ist dann eine "Einhüllende" für nahezu alle möglichen Geschwindigkeitslängsdifferenzen ohne übermäßigen Radschlupf an allen Rädern. Dann liegen jedoch die Grenzkriterien gerade in dem Geschwindigkeitsbereich, in dem das Minimum des Gebiets III auftritt, in einem die Funktionsfähigkeit der Anordnung einschränkenden Bereich.

Es ist deshalb sinnvoll, die Anordnung um eine Kurvenkorrektureinrichtung zu ergänzen. Diese erkennt aus den Radgeschwindigkeiten vfl, vfr, vrl und vrr eine Kurvenfahrt des Kraftfahrzeugs und korrigiert wenigstens ein fahrgeschwindigkeitsabhängiges, unterhalb von Geschwindigkeitslängsdifferenzen für schlupflos oder mit nicht überhöhtem Schlupf laufenden Rädern liegendem Grenzkriterium $dvg = f(v)$ für die Geschwindigkeitslängsdifferenz $dvl = vr-vf$, nämlich das zweite Toleranzband II. Dies geschieht derart, daß die durch die Kurvenfahrt bedingte Zunahme der Geschwindigkeitslängsdifferenz dvl wenigstens annähernd ausgeglichen wird. Die Kurvenkorrektur wird hierbei lediglich in einem unteren Fahrzeuggeschwindigkeitsbereich $0 < v < vgc$ (vgc bspw. bei 40 km/h) vorgenommen.

Die Kurvenkorrektur erfolgt mittels eines Kurvenkorrekturwerts $dvk = k_1*(dvq-k_2)*vf$, welcher aus einem Produkt eines ersten konstanten Faktors $k_1$ mit einer Differenz zwischen einer relativen Geschwindigkeitsquerdifferenz dvg und einer Konstanten $k_2$ und mit einer mittleren Geschwindigkeit $vf = (vfl + vfr)/2$ einer zweiten angetriebenen Achse 3 ermittelt wird. Die relative Geschwindigkeitsquerdifferenz dvg ergibt sich entweder aus der gemittelten Summe von Beträgen der Geschwindigkeitsquerdifferenzen der Räder an beiden angetriebenen Achsen $dvq = (|vfl-vfr|/vf + |vrl-vrr|/vr)/2$ oder aus dem Betrag der Differenz der mittleren Geschwindigkeiten der Räder jeweils einer Fahrzeugseite $dvq = |(vfl + vrl)/2-(vfr + vrr)/2|/v$.

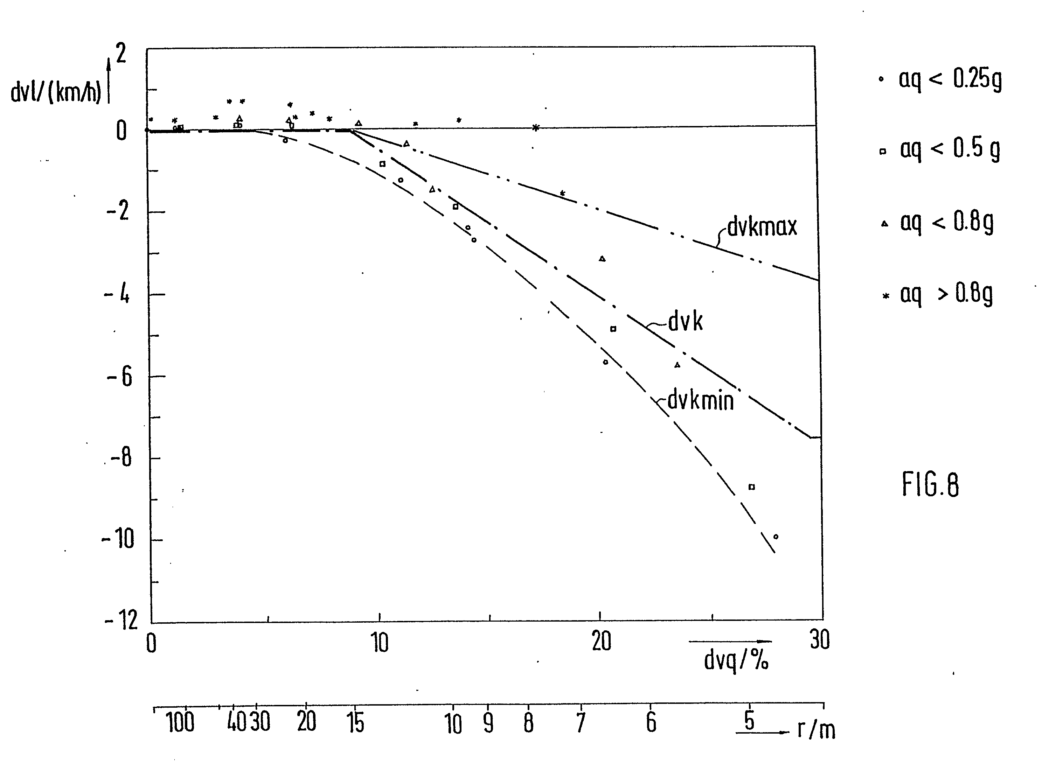

Der Kurvenkorrekturwert dvk (strichpunktierte Linie) ist in Fig. 8 in einem Diagramm gezeigt, über dessen Abszisse die relative Geschwindigkeitsquerdifferenz dvg (in %) bzw. ein Kurvenradius r, und über dessen Ordinate die Geschwindigkeitslängsdifferenz dvl in km/h aufgetragen ist. Der Korrekturwert dvk stellt eine Annäherung an die für verschiedene Werte der Fahrzeugquerbeschleunigung aq auftretenden Wertepaare der Geschwindigkeitslängsdifferenz dvl und der relativen Geschwindigkeitsquerdifferenz dvq dar. Die gestrichelte Linie dvkmin stellt hierbei in erster Näherung die betragsmäßige Maximalgrenze für die Wertepaare dvl, dvq dar. Liegen die Wertepaare dvl, dvqr oberhalb der strichdoppelpunktierten Linie dvkmax, so erfolgt keine Kurvenkorrektur, da sich das Kraftfahrzeug dort bereits außerhalb des Stabilitätsbereichs befindet.

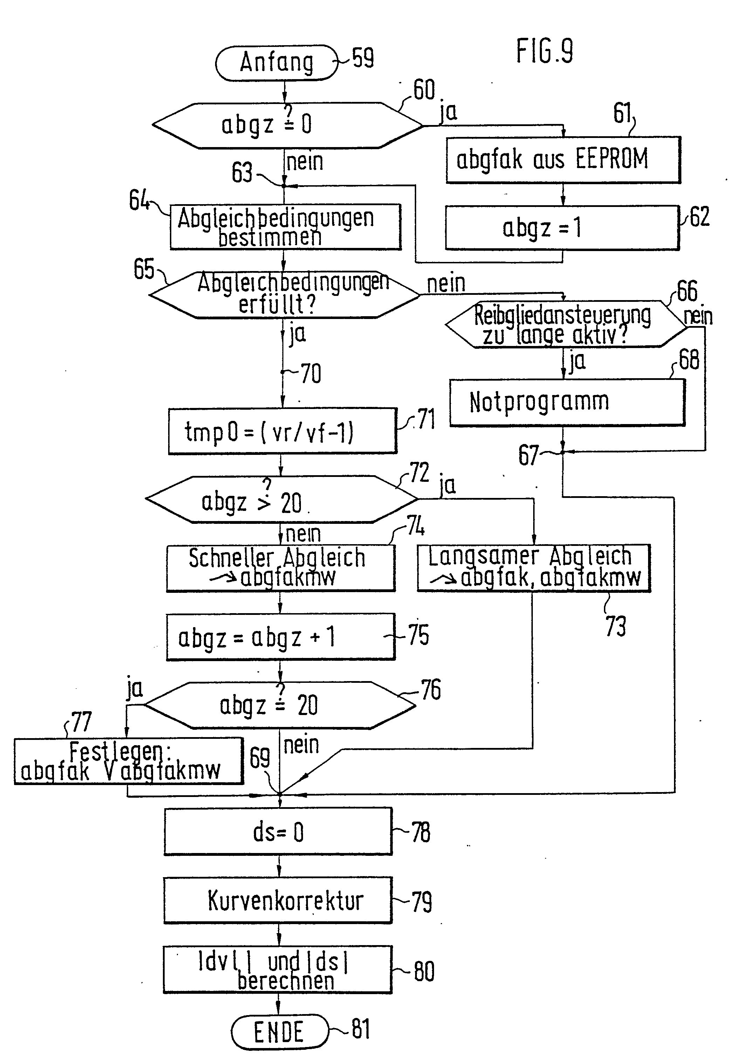

Im folgenden wurden anhand der Fig. 9 bis 13 Flußdiagramme zur Bestimmung der Adaption ds und der Kurvenkorrektur dk (Schritte 50 und 51 in Fig. 4) beschrieben; diese Bestimmung erfolgt in der Darstellung allerdings nicht streng getrennt, obwohl dies selbstverständlich auch möglich wäre.

Fig. 9 zeigt eine prinzipiellen Ablauf zur Bestimmung des Korrekturwerts der Grenzkriterienadaption: Nach dem Programmstart 49 wird abgefragt, ob ein Abgleichzähler abgz, welcher bei einem Start des Kraftfahrzeugs zu Null gesetzt wird und pro Programmdurchlauf unter bestimmten Umständen erhöht wird, abgefragt, ob er gleich Null ist, 60. Wenn ja, wird eine Variable Abgleichfaktor (abgfak) aus einem nichtflüchtigen Speicher geladen, 61, und der Abgleichzähler abgz zu 1 gesetzt, 62 und zu einem Verzweigungspunkt 63 fortgefahren, der auch bei nicht erfüllter Bedingung 60 erreicht wird.

Anschließend werden Abgleichbedingungen 64 bestimmt und abgefragt, 65, ob diese erfüllt sind. Ist dies nicht der Fall, so wird unter einer Bedingung 66 geprüft, ob die Reibgliedansteuerung zu lange aktiv ist (d.h., daß das Reibglied nicht drucklos ist); wenn nein, wird zu einem Verzweigungspunkt 67 fortgefahren, wenn ja, ein Notprogramm 68 gestartet, welches den Abgleichfaktor unter bestimmten Bedingungen auf maximale Abweichung setzt und zum Verzweigungspunkt 67 weitergeschritten und von dort zu einem weiteren Verzweigungspunkt 69.

Ist die Abfrage 65 positiv, so wird nach einem Punkt 70 ein Relativwert der mittleren Geschwindigkeit vr der Räder der ersten Achse, bezogen auf die mittlere Geschwindigkeit vf der Räder der zweiten Achse einer ersten temporären Größe tmp0 zugeordnet, 71 und abgefragt, 72, ob der Abgleichzähler einen bestimmten Wert (20) erreicht hat; dieser Wert hängt hierbei von der charakteristischen Zykluszeit (hier: 4 ms)des Programms und/oder Rahmenprogramms zusammen und charakterisiert diejenige Anzahl von Programmdurchläufen, die nötig sind, um den Abgleichfaktormittelwert abgfakmw ausreichend genau an den gemessenen Wert des geometrischen Achsschlupwerts Sgeo heranzuführen.

Ist die Abfrage 72 positiv (Fahrbetrieb), so erfolgt ein langsamer Abgleich über eine größere Anzahl von Programmdurchläufen, 73, aus dem ein Abgleichfaktor abgfak und ein Abgleichfaktormittelwert abgfakmw hervorgeht. Anschließend wird zum Punkt 69 gesprungen. Ist die Abfrage 72 dagegen negativ, so liegt ein Zustand eines nicht abgeschlossenen Schnellabgleichs vor und es erfolgt ein schneller Abgleich 74, aus dem ein Abgleichfaktormittelwert abgfakmw hervorgeht. Der Abgleichzähler abgz wird inkremmentiert, 75 und abgefragt, ob dieser den bestimmten Wert (20) erreicht hat, 76; wenn nein, erfolgt ein Sprung zum Punkt 69, wenn ja, wird unter den schon weiter oben beschriebenen Bedingungen festgelegt, 77, ob mit dem Abgleichfaktor abgfak, der vor den Schnellabgleich anlag oder mit dem mittlerweile aufgelaufenen Abgleichfaktormittelwert abgfakmw weitergerechnet wird, und ebenfalls zum Punkt 69 gesprungen.

Nach Durchlaufen des Punkts 69 wird der Korrekturwert ds zu Null gesetzt, 78, das Unterprogramm Kurvenkorrektur 79 aufgerufen und der Betrag der Geschwindigkeitslängsdifferenz |dvl| und der Betrag des aus der Adaption und der Kurvenkorrektur bestimmten Korrekturwerts |ds| ermittelt, 80, und das Programmmodul beendet, 81.

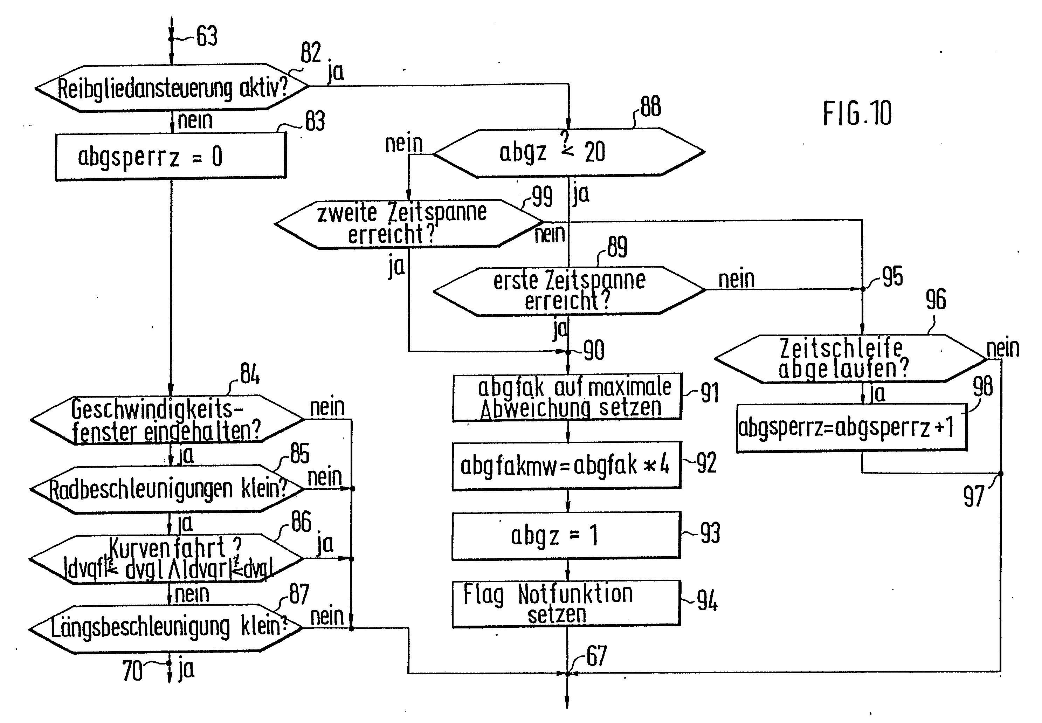

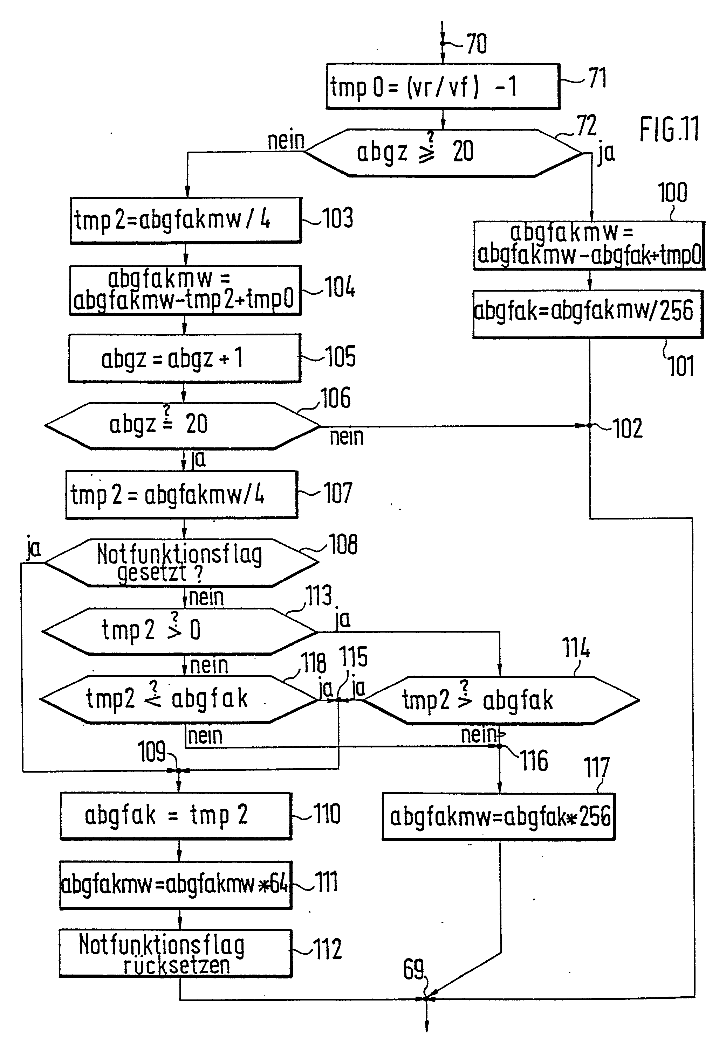

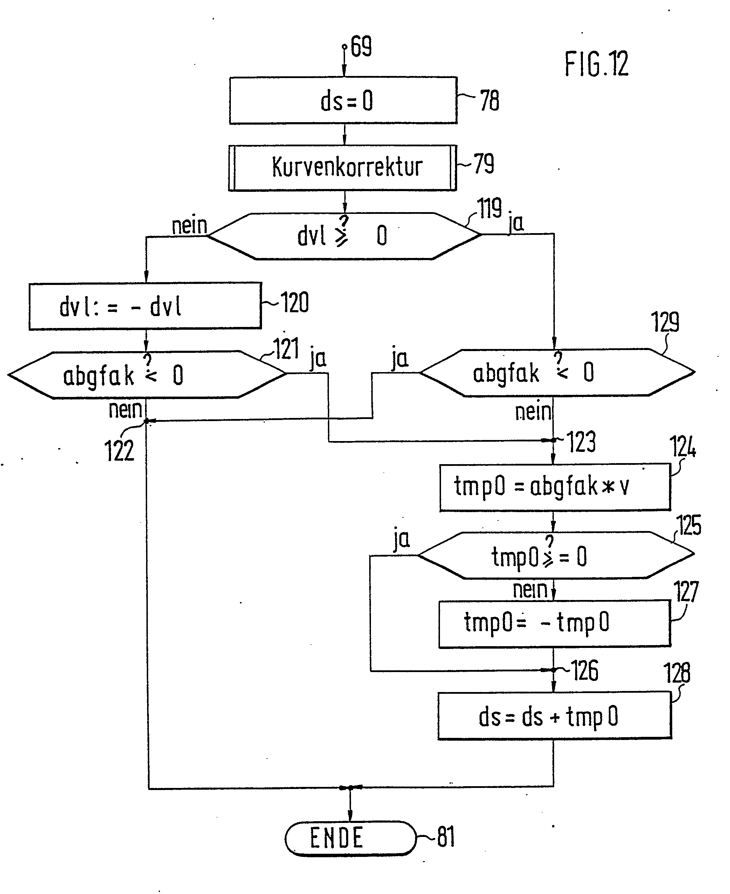

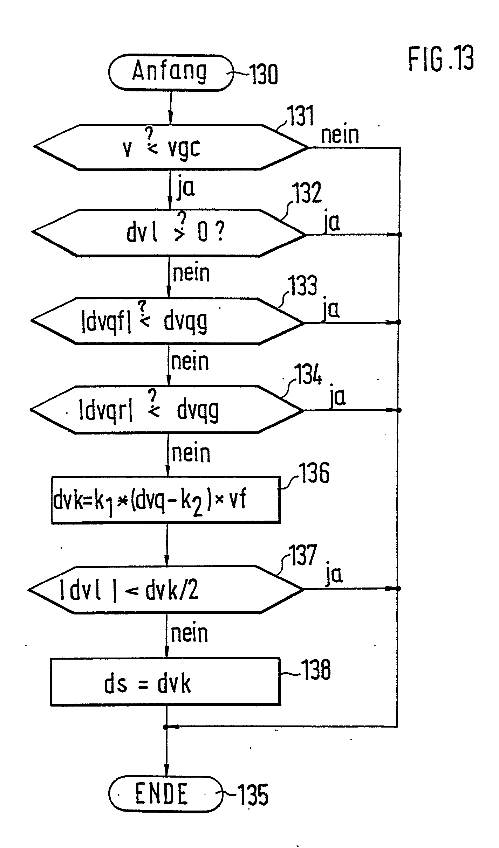

Die zwischen den Punkten 63 und 67 bzw. 70 liegenden Programmschritte werden nachstehend anhand von Fig. 10 (Abfrage der Abgleichbedingungen und Notfunktion), die zwischen den Punkten 70 und 69 liegenden Programmschritte anhand von Fig. 11 (gleitende Mittelwertbildung, langsamer/schneller Abgleich) die zwischen dem Punkt 69 und dem Programmende 81 liegenden Programmschritte anhand von Fig. 12 und die Kurvenkorrektur 79 anhand von Fig. 13 erläutert.

In Fig. 10 wird zunächst abgefragt, ob die Reibgliedansteuerung aktiv ist, 82. Wenn nein, wird eine Abgleichsperrzeit abgsperrz zu Null gesetzt, 83. Danach wird abgefragt, ob die Fahrgeschwindigkeit v innerhalb eines bestimmten Geschwindigkeitsfensters liegt, 84; wenn nein, wird zum Punkt 67 verzweigt, wenn ja, wird abgefragt, 85, ob die Radbeschleunigungen aller Räder kleiner als ein Maximalwert sind. Wenn nein, erfolgt ein Sprung zum Punkt 67, wenn ja, wird geprüft, 86, ob sich das Fahrzeug in Kurvenfahrt befindet. Hierzu wird geprüft, ob die Beträge der relativen Geschwindigkeitsquerdifferenz |dvqf|und |dvqr| kleiner als ein Grenzwert dvql sind, welcher beispielsweise bei 2 % angesiedelt sein kann. Wenn ja, erfolgt ein Sprung zum Punkt 67, wenn nein, wird abgefragt, 87, ob die statische und/oder dynamische Längsbeschleunigung des Kraftfahrzeugs unterhalb eines bestimmten Maximalwerts liegt; wenn nein, erfolgt ein Sprung zum Punkt 67, wenn ja, ein Sprung zum Punkt 70.

Ist die Abfrage 82 positiv, so wird ein 'Notprogramm" gestartet; es wird abgefragt, ob der Abgleichzähler abgz kleiner als ein Wert 20 ist. Wenn ja, so befindet sich das Programm im Startbetrieb (unmittelbar nach Start des Kraftfahrzeugs), oder nach einer Notfunktion, und nach Durchlaufen einer ersten Zeitspanne (Abfrage 89) und einem Verzweigungspunkt 90 wird der Abgleichfaktor abgfak auf maximale Abweichung gesetzt (hervorgerufen z. B. durch Schneeketten oder Notrad auf einer Achse), 91 und der Abgleichfaktormittelwert abgfakmw wird gleich einem Vielfachen, beispielsweise dem Vierfachen des Abgleichfaktors abgfak gesetzt, 92, der Abgleichzähler abgz zu 1 gesetzt, 93 und ein Flag "Notfunktion" gesetzt, 94 und zum Punkt 67 zurückgekehrt.

Ist die erste Zeitspanne 89 noch nicht erreicht, so wird nach Passieren eines Verzweigungspunkts 95 abgefragt, ob eine Zeitschleife 96 abgelaufen ist; wenn nein, wird nach Durchlaufen eines Verzweigungspunkts 97 zum Punkt 67 zurückgekehrt, wenn ja, die Abgleichsperrzeit abgsperrz inkrementiert, 98 und zum Punkt 97 gesprungen.

Ist die Abfrage 88 nicht erfüllt, so befindet sich das Programm im Fahrbetrieb und es erfolgt eine Abfrage 99, ob eine zweite längere Zeitspanne erreicht ist; ist dies der Fall, so wird zum Punkt 90 gesprungen (Erhöhen des Abgleichfaktors abgfak), wenn nicht, zum Punkt 95.

Bei der Bildung des gleitenden Mittelwerts nach Fig. 11 erfolgt zunächst nach Durchlaufen des Punkts 70 und des Programmschritts 71 die Abfrage des Abgleichzählers abgz, 72. Ist dieser größer oder gleich dem den Startbetrieb begrenzenden Wert 20, so erfolgt ein langsamer Abgleich, indem ein neuer Abgleichsfaktormittelwerts abgfakmw auf den Wert des alten Abgleichfaktormittelwert abgfakmw, minus dem Abgleichfaktor abgfak, plus der ersten temporären Größe tmpo gesetzt wird, 100, und der Abgleichfaktor abgfak auf einen bestimmten, durch einen höheren Quotienten (256) geteilten Abgleichfaktormittelwert abgfakmw gesetzt, 101 und nach Passieren eines Punkts 102 zum Punkt 69 zurückgekehrt wird.

Ist die Abfrage 72 negativ, so erfolgt ein schneller Abgleich: Eine zweite temporäre Große tmp2 wird zu einem Wert gesetzt, der sich durch Teilung des Abgleichfaktormittelwerts abgfakmw durch einen kleineren Quotienten (4) ergibt, 103. Ein neuer Wert des abgfakmw wird auf den alten Wert des abgfakmw gesetzt, von dem die zweite temporäre Größe tmp2 subtrahiert und zu dem die erste temporäre Größe tmp0 hinzuaddiert wird, 104. Der Abgleichzähler abgz wird inkremmentiert, 105, und abgefragt, 106, ob der Abgleichszähler abgz den das Ende des Schnellabgleichs kennzeichnenden Wert (20) erreicht hat; wenn nein, so erfolgt ein Rücksprung über Punkt 102 zum Punkt 69, wenn ja, wird die zweite temporäre Größe tmp2 zu einem Wert gesetzt, der sich aus dem Abgleichfaktormittelwert abgfakmw geteilt durch den kleineren Quotienten (4) ergibt, 107.

Es wird abgefragt, ob das Flag Notfunktion gesetzt ist, 108. Wenn ja, wird nach Passieren eines Punkts 109 der Abgleichfaktor abgfak auf die zweite temporäre Größe tmp2 gesetzt, 110, ein neuer Abgleichfaktormittelwert abgfakmw aus dem alten Wert des alten Abgleichfaktormittelwerts abgfakmw, multipliziert mit einem bestimmten Wert (64) bestimmt, 111, und das Flag Notfunktion zurückgesetzt, 112 und zum Punkt 69 zurückgekehrt.

Ist die Abfrage 108 negativ, so wird abgefragt, ob die zweite temporäre Größe tmp2 größer Null ist, 113. Wenn ja, erfolgt eine weitere Abfrage, ob die zweite temporäre Große tmp2 größer als der Abgleichfaktor abgfak ist; 114, wenn ja, erfolgt ein Sprung über einen Punkt 115 zum Punkt 109, wenn nein, wird nach Passieren eines Punkts 116 der Abgleichfaktormittelwert abgfakmw auf den Wert des Abgleichfaktors abgfak, multipliziert mit dem Wert des höheren Quotienten (256), gesetzt, 117 und zum Punkt 69 zurückgekehrt.

Ist die Abfrage 113 negativ, so wird abgefragt, ob die zweite temporäre Größe tmp2 kleiner als der Abgleichfaktor abgfak ist, 118; wenn ja, wird zum Punkt 115 verzweigt, wenn nein, zum Punkt 116.

Der Programmzweig zwischen den Punkten 109 und 69 charakterisiert denjenigen Systemzustand, bei dem nach Beendigung der Startphase mit dem neu errechneten Wert der Abgleichgröße weiter gearbeitet wird, während der Programmzweig zwischen den Punkten 116 und 69 den Fall beinhaltet, wo mit dem vom Schnellabgleich anliegenden Wert weitergearbeitet wird.

Im Teilprogramm nach Fig. 12 wird nun der Korrekturwert ds ermittelt, indem dieser zunächst zu Null gesetzt, 78 und das Programm 79 zur Bestimmung eines Kurvenkorrekturwerts dvk aufgerufen wird; dieser wird dort zum Korrekturwert ds hinzugefügt. Anschließend wird abgefragt, ob die Geschwindigkeitslängsdifferenz dvl größer oder gleich Null ist, 119. Wenn nein, wird dvl invertiert, 120 und abgefragt, ob der Abgleichfaktor abgfak kleiner Null ist, 121; wenn nein, wird das Programm nach Durchlaufen eines Punkts 122 beendet, da dann der Abgleichfaktor abgfak und die Geschwindigkeitslängsdifferenz dvl in unterschiedlichen Quadranten des Geschwindigkeitslängsdifferenz-Geschwindigkeits-Diagramms liegen und so nicht oder nur aufgrund von Kurvenfahrt korrigiert wird.

Ist die Abfrage 121 dagegen positiv, so erfolgt ein Sprung zu einem Punkt 123, von dem ab die erste temporäre Größe tmp0 zu einem Wert gesetzt wird, der sich aus dem Abgleichfaktor abgfak (entsprechend der Steigung der Korrekturgeraden), multipliziert mit der augenblicklichen Fahrgeschwindigkeit v (oder der mittleren Geschwindigkeit der Räder an der zweiten Achse als Bezug für die wahre Fahrgeschwindigkeit über Grund), ergibt, 124.

Zur Betragsbildung der ersten temporären Größe tmp0 wird abgefragt, ob diese größer oder gleich Null ist; wenn ja, wird zu einem Punkt 126 fortgeschritten, wenn nein, die erste temporäre Größe tmpo invertiert, 127 und nach Passieren des Punkts 126 ein neuer Wert des Korrekturwerts ds bestimmt, indem zu dem alten Korrekturwert (d.h., der Kurvenkorrektur) die erste temporäre Größe tmp0 hinzuaddiert wird, 128; anschließend wird das Programm beendet, 81.

Ist die Abfrage 119 positiv, so wird abgefragt, 129, ob der Abgleichfaktor abgfak kleiner Null ist. Wenn ja, wird zum Punkt 122 weitergeschritten, wenn nein, zum Punkt 123.

Fig. 13 schließlich zeigt noch das Unterprogramm zur Kurvenkorrektur. Nach dem Programmstart 130 erfolgen zunächst Abfragen von Bedingungen für die Kurvenkorrektur:
- Fahrzeuggeschwindigkeit v kleiner als ein Grenzwert vgc (beispielsweise 40 km/h), 131,
- Geschwindigkeitslängsdifferenz dvl größer Null, 132,
- Betrag der relativen Geschwindigkeitsquerdifferenz an der zweiten Achse |dvqf| kleiner als ein Grenzwert dvqg, 133 und
- Betrag der relativen Geschwindigkeitsquerdifferenz an der ersten Achse |dvqr| kleiner als der Grenzwert dvqg, 134.

Ist die Bedingung 131 nicht erfüllt oder wenigstens eine der Bedingungen 132 bis 134 erfüllt, so erfolgt keine Kurvenkorrektur und das Programm wird beendet, 135.

Ist die Bedingung 131 erfüllt und sind alle der Bedingungen 132 bis 134 nicht erfüllt (erkannte Kurvenfahrt größeren Betrags), so wird der Kurvenkorrekturwert gemäß der Formel $dvk = k_1 \cdot (dvq - k_2) \cdot vf$ ermittelt (durch Rechnung und/oder aus dem in einem nichtflüchtigen Speicher als Funktionstabelle abgelegten Diagramm nach Fig. 8), 136.

Ist der Betrag der Geschwindigkeitslängsdifferenz dvl kleiner als die Hälfte des Kurvenkorrekturwerts dvk, so erfolgt keine Kurvenkorrektur (Programmende 135). Ist dies nicht der Fall, so wird der Korrekturwert ds auf den Kurvenkorrekturwert dvk gesetzt 138 und das Programm beendet, 135.

Durch die beiden Abfragen 133, 134 und den Wert $k_2$ wird erreicht, daß die Kurvenkorrektur nur innerhalb eines sinnvollen Bereichs von Kurvenradien, beispielsweise $4{,}5\ m \leq r \leq 14{,}7\ m$ erfolgt. Die Werte 4 und 256 bei der Bildung der Abgleichfaktoren und -mittelwerte sowie der Wert 20 für den Abgleichzähler sind Werte, die von der Programmzykluszeit und der Ventildynamik abhängen und nicht notwendigerweise in dieser Größenordnung liegen müssen. Sie haben sich jedoch mit der gegebenen Anordnung als sinnvoll erwiesen. Der Wert 20 für den den Startbetrieb kennzeichnenden Wert ergibt sich daraus, daß bei einer gleitenden Mittelwertbildung für den Abgleichfaktor mit dem Quotienten 4 (jeweils 1/4 des neu errechneten Werts wird zur Summe aus 3/4 des alten hinzugezählt), dieser nach 20 Berechnungen seinen Endwert praktisch erreicht hat (Sprungantwort); dies entspricht einer Abgleichzeit von ca. 80ms. Bei langsamem Abgleich wird immer 1/256 des neuen Abgleichswerts zu 255/256 des alten Abgleichswerts hinzuaddiert; die Antwort auf einen Sprung erreicht hier nach ca. 3 Sekunden etwa 90% ihres Endwerts.

Es bleibt anzumerken, daß die Adaption des Grenzkriteriums dvg und die Kurvenkorrektur in gleicher Weise Anwendung bei Antiblockiersystemen und Antriebsschlupfregelsystemen finden können bzw. überall dort, wo radgeschwindigkeitsabhängige Grenzkriterien zu Steuerungszwecken herangezogen werden.

### Ansprüche

1. Anordnung zur Steuerung der Kraftübertragung auf wenigstens zwei angetriebene Achsen eines Kraftfahrzeugs, mit einem steuerbaren vorzugsweise elektro- hydraulisch betätigten Reibglied zur Begrenzung eines Drehzahlausgleichs zwischen den Achsen oder der Ausgleichswirkung einer einen Drehzahlausgleich zwischen den Achsen ermöglichenden Ausgleichseinrichtung, insbesondere einer Differentialbremse eines Mittendifferentials, wobei das Reibglied über ein von einem Steuergerät angesteuertes Stellglied in Abhängigkeit von über Sensoren erfaßten Betriebs- und/oder Fahrparametern in seiner Begrenzungswirkung steuerbar ist, **dadurch gekennzeichnet,** daß das Steuergerät (16) eine Geschwindigkeitslängsdifferenz (dvl = vr-vf) zwischen einer Drehgeschwindigkeit (mittlere Geschwindigkeit (vr = (vrl + vrr)/2) der Räder (11, 12)) einer ersten angetriebenen Achse (2) und einer Drehgeschwindigkeit (mittlere Geschwindigkeit (vf = (vfl + vfr)/2) der Räder (9, 10)) einer zweiten angetriebenen Achse (3) bestimmt und diese mit einem geschwindigkeitsabhängigen, oberhalb von Geschwindigkeitslängsdifferenzen (dvl) für schlupflos bzw. mit näherungsweise gleichem Radschlupf ($SR_{fr} = (vfr-v)/v$ = $SR_{fl} = (vfl-v)/v$ = $SR_{rl} = (vrl-v)/v$ = $SR_{rr} = (vrr-v)/v$) gegenüber der Fahrbahn laufende Räder liegenden ersten Toleranzband (I) und einem geschwindigkeitsabhängigen, unterhalb von Geschwindigkeitslängsdifferenzen (dvl) für schlupflos bzw. mit gleichem Radschlupf (SRfr = (vfr-v)/v = SRfl = (vfl-v)/v = SRrl = -(vrl-v)/v = SRrr = (vrr-v)/v) gegenüber der Fahrbahn laufenden Rädern liegenden zweiten Toleranzband (II) vergleicht und das Stellglied (14) derart ansteuert, daß bei Überschreiten einer Obergrenze (dvgph) des ersten Toleranzbands (I) bzw. bei Unterschreiten einer Untergrenze (dvgnh) des zweiten Toleranzbands (II) die Begrenzung des Drehzahlausgleichs erhöht, bei gleichzeitigem Unterschreiten einer Untergrenze (dvgpl) des ersten Toleranzbands (I) und Überschreiten einer Obergrenze (dvgnl) des zweiten Toleranzbands (II) die Begrenzung des Drehzahlausgleichs vermindert und sonst beibehalten wird.

2. Anordnung nach Anspruch 1, **dadurch gekennzeichnet,** daß die Erhöhung bzw. die Verminderung der Begrenzung des Drehzahlausgleichs mit steuerbarer Änderungsgeschwindigkeit erfolgt.

3. Anordnung nach Anspruch 2, **dadurch gekennzeichnet,** daß die Änderungsgeschwindigkeit für die Erhöhung und die Verminderung der Begrenzung des Drehzahlausgleichs verschieden ist.

4. Anordnung nach Anspruch 2 oder 3, **dadurch gekennzeichnet,** daß die Änderungsgeschwindigkeit von der Höhe des Betrags der Geschwindigkeitslängsdifferenz (|vr-vf|) und/oder dessen oder deren zeitlicher Änderung (d(|vr-vf|)/dt, d-(vr-vf)/dt) abhängig ist.

5. Anordnung nach Anspruch 2, 3 oder 4, **dadurch gekennzeichnet,** daß die Änderungsgeschwindigkeit vom Zustand von Hilfsenergieträgern des Stellglieds (14) und/oder von der Höhe eines Drucks im Stellglied (14) und/oder einer Vorgeschichte einer Ansteuerung des Stellglieds (14) abhängig ist.

6. Anordnung nach wenigstens einem der vorangehenden Ansprüche, **dadurch gekennzeichnet,** daß zur Vermeidung von Regelschwingungen eine in endlicher Zeit auf eine Anforderung zur Erhöhung und/oder zum Halten der Begrenzung des Drehzahlausgleichs folgende Anforderung zur Verminderung der Begrenzung zeitlich verzögert und/oder unterdrückt wird.

7. Anordnung nach wenigstens einem der vorangehenden Ansprüche, **dadurch gekennzeichnet,** daß das im Bereich positiver Geschwindigkeitslängsdifferenzen (dvl>0) angesiedelte erste Toleranzband (I) mit wachsender Fahrzeuggeschwindigkeit (v) in einem unteren Geschwindigkeitsbereich (0 < v ≦ vga) abfallend oder kostant, in einem mittleren Geschwindigkeitsbereich (vga < v ≦ vgb) konstant und in einem oberen Geschwindigkeitsbereich (v>vgb) ansteigend und das im Bereich negativer Geschwindigkeitslängsdifferenzen (dvl<0) angesiedelte zweite Toleranzband (II) mit wachsender Fahrzeuggeschwindigkeit (v) in einem unteren Geschwindigkeitsbereich (0 < v ≦ vga) ansteigend oder konstant, in einem mittleren Geschwindigkeitsbereich (vga < v ≦ vgb) konstant und in einem oberen Geschwindigkeitsbereich (v>vgb) abfallend ist.

8. Anordnung nach Anspruch 7, **dadurch gekennzeichnet,** daß die Obergrenze (dvgph) des ersten Toleranzbands (I) und die Untergrenze (dvgnh) des zweiten Toleranzbands (II) am Ende des mittleren Bereichs einem Wert des Achsschlupfs (S = (vr-vf)/vr) zwischen beiden Achsen entspricht, der unterhalb einem bei schlupflos bzw. mit näherungsweise gleichem Radschlupf an allen Rädern (SRfr = (vfr-v)/v = SRFl = (vfl-v)/v = SRrl = -(vrl-v)/v = SRrr = (vrr-v)/v) gegenüber der Fahrbahn laufenden Fahrzeug durch übliche Fertigungstoleranzen von Fahrzeugreifen entstehenden geometrischen Achsschlupfwert liegt.

9. Anordnung nach Anspruch 8, **dadurch gekennzeichnet,** daß der Wert vorzugsweise um 1% bei einer Fahrgeschwindigkeit (v) im Bereich von ca. 100km/h bis ca. 150km/h entspricht.

10. Anordnung nach Anspruch 7, 8 oder 9, **dadurch gekennzeichnet,** daß im oberen Geschwindigkeitsbereich (v>vgb) die Steigung der Toleranzbandgrenzen (I, II) wenigstens annähernd der Zunahme der Geschwindigkeitslängsdifferenz (dvl) zwischen beiden Achsen entsprechend dem Wert des Achsschlupfs (5) entspricht.

11. Anordnung nach wenigstens einem der vorangehenden Ansprüche, **dadurch gekennzeichnet,** daß im unteren Geschwindigkeitsbereich (0 kleiner v kleiner oder gleich vga) die Untergrenze (dvgnh) des zweiten Toleranzbands (II) und/oder die Obergrenze (dvgph) des ersten Toleranzbands (I) eine Einhüllende für die bei Kurvenfahrt des Kraftfahrzeugs maximal auftretenden fahrgeschwindigkeitsabhängigen Geschwindigkeitslängsdifferenzen (dvl) ist.

12. Anordnung nach wenigstens einem der vorangehenden Ansprüche, **dadurch gekennzeichnet,** daß ein Druckkolben der Differentialbremse zur Erhöhung der Begrenzung des Drehzahlausgleichs über ein elektromagnetisches Druckaufbauventil (32) mit einer Druckquelle (29) und zur Verminderung der Begrenzung des Drehzahlausgleichs über ein elektromagnetisches Druckabbauventil (33) mit einer Drucksenke (31) verbunden werden kann, wobei die elektromagnetischen Ventile (32, 33) über impulsförmige Signale vom Steuergerät (16) angesteuert werden.

13. Anordnung nach Anspruch 12, **dadurch gekennzeichnet,** daß die impulsförmigen Signale aus Reihen rechteckförmiger Einschaltimpulse und Pulspausen bestehen, wobei die kürzeste Impulsdauer gerade so bemessen ist, daß das angesteuerte elektromagnetische Ventil (32 bzw. 33) gerade öffnet.

14. Anordnung nach Anspruch 12 oder 13, **dadurch gekennzeichnet**, daß nach einer vorausgegangenen Aufhebung der Begrenzung ein Druckaufbau mit einem Einschaltpuls verlängerter Impulsdauer eingeleitet wird.

15. Anordnung nach wenigstens einem der vorangehenden Ansprüche, **dadurch gekennzeichnet**, daß das Steuergerät (16) auf der Basis eines an sich bekannten Mikrorechnersystems aufgebaut ist, das Geschwindigkeiten (vfl,vfr,vrl,vrr) der Räder (10, 9, 12, 11) des Kraftfahrzeugs (I) mittels Geschwindigkeitssensoren (20-23) an diesen Rädern erfaßt und wenigstens in Abhängigkeit von Signalen dieser Sensoren Ansteuerwerte für das Stellglied (14) ermittelt und dieses ansteuert.

16. Anordnung nach Anspruch 15, **dadurch gekennzeichnet**, daß das Steuergerät (16) zusätzlich Signale von einem Bremslichtschalter (24) und/oder von einem Antiblockier- Bremssystem und/oder einem Handbremsschalter (25) erfaßt und das Stellglied (14) derart ansteuert, daß bei Betätigen der Betriebsbremse eine langsame und bei Wirksamwerden des Antiblockier- Bremssystems oder bei Betätigen der Handbremse eine schnelle Verminderung der Begrenzung des Drehzahlausgleichs erfolgt.

17. Anordnung nach Anspruch 15 oder 16, **dadurch gekennzeichnet**, daß ein Druck im Druckkolben des Stellglieds (14) mittels eines Drucksensors erfaßt und ein Verhältnis der jeweiligen Zeitdauer von Einschaltimpulsen zu Pulspausen mit steigendem Druck vermindert und mit fallendem Druck erhöht wird.

18. Anordnung zur Steuerung der Kraftübertragung auf wenigstens zwei angetriebene Achsen eines Kraftfahrzeugs, mit einem steuerbaren vorzugsweise elektro- hydraulisch betätigten Reibglied zur Begrenzung eines Drehzahlausgleichs zwischen den Achsen oder der Ausgleichswirkung einer einen Drehzahlausgleich zwischen den Achsen ermöglichenden Ausgleichseinrichtung, insbesondere einer Differentialbremse eines Mittendifferentials, wobei das Reibglied über ein von einem Steuergerät angesteuertes Stellglied in Abhängigkeit von über Sensoren erfaßten Betriebs- und/oder Fahrparametern in seiner Begrenzungswirkung steuerbar ist, insbesondere nach Anspruch 1 und/oder einem oder mehreren der vorangehenden Ansprüche, **dadurch gekennzeichnet**, daß das Steuergerät (16) über eine Adaptionseinrichtung verfügt, welche aus den mittels Geschwindigkeitssensoren (20 bis 23) an den Rädern (10, 9, 12, 11) des Kraftfahrzeugs gemessenen Radgeschwindigkeiten (vfl,vfr,vrl,vrr) eine aufgrund unterschiedlicher Abrollradien der Räder auftretende geschwindigkeitsabhängige Abweichung in der Geschwindigkeitslängsdifferenz (dvl = vr-vf) zwischen einer Drehgeschwindigkeit (mittlere Geschwindigkeit (vr = (vrl + vrr)/2) der Räder (11, 12)) einer ersten angetriebenen Achse (2) und einer Drehgeschwindigkeit (mittlere Geschwindigkeit (vf = (vfl + vfr)/2) der Räder (9, 10)) einer zweiten, angetriebenen Achse (3) von der Geschwindigkeitslängsdifferenz Null (dvl = 0) bei annähernd schlupflos oder mit näherungsweise demselben Schlupf gegenüber der Fahrbahn laufenden Rädern (SRfr = (vfr-v)/v = SRfl = (vfl-v)/v = SRrl = (vrl-v)/v = SRrr = (vrr-v)/v) erfaßt (stationäre Geschwindigkeitslängsdifferenz (dvl|$_{stat}$ = kstat·v)) und wenigstens ein fahrgeschwindigkeitsabhängiges Grenzkriterium (dvg = f(v), I, II) für die Geschwindigkeitslängsdifferenz (dvl = vr-vf) zur gezielten Beeinflussung der Begrenzung des Drehzahlausgleichs durch einen linear von der Fahrzeuggeschwindigkeit (v) abhängigen Korrekturwert (ds = f(v)) adaptiert.

19. Anordnung nach Anspruch 18, **dadurch gekennzeichnet**, daß die Adaption nur bei annähernd schlupflos oder mit näherungsweise demselben Schlupf gegenüber der Fahrbahn laufenden Rädern (SRfr = (vfr-v)/v = SRfl = (vfl-v)/v = SRrl = (vrl-v)/v = SRrr = (vrr-v)/v) vorgenommen wird.

20. Anordnung nach Anspruch 19, **dadurch gekennzeichnet**, daß der Zustand der annähernd schlupflos oder mit näherungsweise demselben Schlupf gegenüber der Fahrbahn laufenden Räder durch die folgenden Systemzustände nachgebildet wird:

- die Begrenzung des Drehzahlausgleichs ist aufgehoben,
- die Fahrzeuggeschwindigkeit (v) befindet sich innerhalb eines bestimmten Geschwindigkeitsfensters,
- der Betrag der Radbeschleunigungen (dvfl/dt, dvfr/dt, dvrl/dt und dvrr/dt) aller Räder liegt unterhalb eines bestimmten Radbeschleunigungs-Maximalwerts,
- das Kraftfahrzeug befindet sich nicht in Kurvenfahrt
- es sind keine Fahrzeugbremsen betätigt und/oder
- der Betrag einer statischen und/oder dynamischen Längsbeschleunigung (dv/dt) des Kraftfahrzeugs liegt unterhalb eines bestimmten Längsbeschleunigungs- Maximalwerts.

21. Anordnung nach Anspruch 20, **dadurch gekennzeichnet**, daß sich der Systemzustand des sich nicht in Kurvenfahrt befindlichen Kraftfahrzeugs daraus ergibt, daß

- ein Betrag einer relativen Geschwindigkeitsquerdifferenz (|dvqr| = |vrl-vrr|/vr) der Räder (11, 12) der ersten angetriebenen Achse (2) und ein Betrag einer relativen Geschwindigkeitsquerdifferenz (dvqf| = |vfl-vfr|/vf) der Räder (9, 10) der zweiten angetriebenen Achsen kleiner als ein relativer Geschwindigkeitsquerdifferenz- Grenzwert (dvgl) sind, und/oder

- Beträge relativer Geschwindigkeitslängsdifferenzen ($dvlr = |vfr-vrr|/v$) und ($|dvll| = |vfl-vrl|/v$) jeweils einer Fahrzeugseite jeweils kleiner als ein Geschwindigkeitslängsdifferenz- Grenzwert (dvlg) sind.

22. Anordnung nach Anspruch 19 oder 20, **dadurch gekennzeichnet**, daß der Systemzustand des unterhalb eines bestimmten Längsbeschleunigungs-Maximalwerts liegenden Betrags der statischen und/oder dynamischen Längsbeschleunigung (dv/dt) des Kraftfahrzeugs mittels eines Beschleunigungssensors oder Beschleunigungsschalters (27) ermittelt wird.

23. Anordnung nach wenigstens einem der Ansprüche 18 bis 22, **dadurch gekennzeichnet**, daß die Bestimmung des Korrekturwerts (ds) und dessen Anpassung an Veränderungen im Fahrbetrieb des Kraftfahrzeugs mit endlicher Abgleichgeschwindigkeit erfolgt.

24. Anordnung nach wenigstens einem der Ansprüche 18 bis 23, **dadurch gekennzeichnet**, daß die Bestimmung des Korrekturwerts ($ds = abgfak*v$) aus dem Produkt eines Abgleichfaktors (abgfak) und der Fahrzeuggeschwindigkeit (v) erfolgt, wobei der Abgleichfaktor (abgfak) mittelbar oder unmittelbar und mit endlicher Abgleichgeschwindigkeit aus Werten einer auf die Fahrgeschwindigkeit (v bzw. vf) bezogenen Geschwindigkeitslängsdifferenz (erste temporäre Größe $tmp0 = vr/vf-1$ bzw. $tmp0 = -(vr-vf)/vf$ bzw. $tmp0 = (vr-vf)/v$) zwischen den Achsen (2, 3) ermittelt wird.

25. Anordnung nach Anspruch 23 oder 24, **dadurch gekennzeichnet**, daß die Bestimmung des Korrekturwerts (ds) bzw. des Abgleichfaktors (abgfak) und dessen Anpassung mittels gleitender Mittelwertbildung erfolgt

26. Anordnung nach Anspruch 23, 24 oder 25, **dadurch gekennzeichnet**, daß der Korrekturwert (ds) bzw. der Abgleichfaktor (abgfak) unmittelbar nach dem Starten des Kraftfahrzeugs (Startbetrieb) bzw. dessen Brennkraftmaschine (4) mit einer höheren Abgleichgeschwindigkeit ermittelt wird als während des Fahrbetriebs.

27. Anordnung nach wenigstens einem der Ansprüche 23 bis 26, **dadurch gekennzeichnet**, daß der Korrekturwert (ds) bzw. der Abgleichfaktor (abgfak) unmittelbar nach dem Starten des Kraftfahrzeugs bzw. dessen Brennkraftmaschine (4) auf einen Wert gesetzt wird, welcher unmittelbar nach dem Abstellen als zuletzt gültiger Wert abgespeichert wurde.

28. Anordnung nach Anspruch 27, **dadurch gekennzeichnet**, daß der Abgleichfaktor (abgfak) unmittelbar nach dem Starten mit kurzer Zeitkonstante ermittelt wird, wobei pro Programmdurchlauf eines errechnenden Programms für den gleitenden Mittelwert (abgfakmw) des Abgleichfaktors (abgfak) dieser aus jeweils (1/n) eines neu ermittelten Abgleichfaktors (abgfak) zu ((n-1)/n) eines vorher ermittelten Werts zusammengesetzt wird.

29. Anordnung nach Anspruch 28, **dadurch gekennzeichnet**, daß nach einer charakteristischen Anzahl von Programmdurchläufen, nach der der gleitende Mittelwert (abgfakmw) bei einer Sprungantwort die neu ermittelte bezogene Geschwindigkeitslängsdifferenz (tmp0) erreicht hat, der neu bestimmte Wert mit dem abgespeicherten Wert verglichen wird und nur dann mit dem neuen Wert weitergerechnet wird, wenn dieser betraglich größer als der alte Wert ist und/oder sein Vorzeichen gewechselt hat und sonst mit dem alten Wert weitergerechnet wird.

30. Anordnung nach wenigstens einem der Ansprüche 18 bis 29, **dadurch gekennzeichnet**, daß für den Fall, daß bevor eine Adaption nach dem Start nachgeführt werden konnte eine sofortige Ansteuerung des Stellglieds (14) zur Begrenzung des Drehzahlausgleichs erfolgt und diese für eine vorgegebene erste Zeitspanne beibehalten worden ist, wenigstens ein Grenzkriterium ($dvg = f(v)$) betragsmäßig um einen bestimmten Betrag erhöht wird bis wieder eine Adaption durchgeführt werden kann.

31. Anordnung nach wenigstens einem der Ansprüche 18 bis 30, **dadurch gekennzeichnet**, daß für den Fall, daß die erhöhte Begrenzung im Fahrbetrieb für eine vorgegebene zweite und längere Zeitspanne anliegt, ein Grenzkriterium ($dvg = f(v)$) betragsmäßig um einen bestimmten Betrag erhöht wird, bis wieder eine Adaption durchgeführt werden kann.

32. Anordnung nach wenigstens einem der Ansprüche 18 bis 31, **dadurch gekennzeichnet**, daß bei einem aus einem für positive Geschwindigkeitslängsdifferenzen ($dvl = vr-vf > 0$) gültigen ersten Toleranzband (I) und einem für negative Geschwindigkeitslängsdifferenzen ($dvl = vr-vf < 0$) gültigen zweiten Toleranzband (II) bestehenden fahrgeschwindigkeitsabhängigen Grenzkriterium ($dvg = fg(v)$), bei dem das Stellglied (14) derart angesteuert wird, daß bei Überschreiten einer Obergrenze (dvgph) des ersten Toleranzbands (I) bzw. bei Unterschreiten einer Untergrenze (dvgnh) des zweiten Toleranzbands (II) die Begrenzung des Drehzahlausgleichs erhöht, bei Unterschreiten einer Untergrenze (dvgpl) des ersten Toleranzbands (I) bzw. beim Überschreiten einer Obergrenze (dvgnl) des zweiten Toleranzbands (II) die Begrenzung des Drehzahlausgleichs vermindert und sonst beibehalten wird,
- bei positiven Werten des Korrekturwerts ($ds = fs(v)$) lediglich das obere Toleranzband (I) und
- bei negativen Werten des Korrekturwerts ($ds = fs(v)$) lediglich das untere Toleranzband (II) adaptiert wird.

33. Anordnung zur Steuerung der Kraftübertragung auf wenigstens zwei angetriebene Achsen eines Kraftfahrzeugs, mit einem steuerbaren vorzugsweise elektro- hydraulisch betätigten Reibglied zur Begrenzung eines Drehzahlausgleichs zwischen den Achsen oder der Ausgleichswirkung einer einen Drehzahlausgleich zwischen den Achsen ermöglichenden Ausgleichseinrichtung, insbesondere einer Differentialbremse eines Mittendifferentials, wobei das Reibglied über ein von einem Steuergerät angesteuertes Stellglied in Abhängigkeit von über Sensoren erfaßten Betriebs- und/oder Fahrparametern in seiner Begrenzungswirkung steuerbar ist, insbesondere nach Anspruch 1 und/oder einem oder mehreren der vorangehenden Ansprüche, **dadurch gekennzeichnet**, daß das Steuergerät (16) über eine Kurvenkorrektureinrichtung verfügt, welche aus den mittels Geschwindigkeitssensoren an den Rädern des Kraftfahrzeugs gemessenen Radgeschwindigkeiten (vfl,vfr,vrl,vrr) eine Kurvenfahrt des Kraftfahrzeugs erkennt und wenigstens ein fahrgeschwindigkeitsabhängiges unterhalb von Geschwindigkeitslängsdifferenzen (dvl) für schlupflos bzw. mit gleichem Radschlupf $(SRfr = (vfr-v)/v = SRfl = (vfl-v)/v = SRrl = (vrl-v)/v = SRrr = (vrr-v)/v)$ gegenüber der Fahrbahn laufende Räder (9-12) liegendes Grenzkriterium $(dvg = fg(v))$ für die Geschwindigkeitsdifferenz $(dv = vr-vf)$ zwischen einer Drehgeschwindigkeit (mittlere Geschwindigkeit $(vr = (vrl + vrr)/2)$ der Räder (11, 12)) der ersten angetriebenen Achse (2) und einer Drehgeschwindigkeit (mittlere Geschwindigkeit $(vf = (vfl + vfr)/2)$ der Räder (9, 10)) der zweiten angetriebenen Achse (3) zur gezielten Beeinflussung der Begrenzung des Drehzahlausgleichs des Mittendifferentials (6) in einem unteren Fahrzeuggeschwindigkeitsbereich $(0 < v \leq vga)$ und unterhalb eines bestimmten Kurvenradius $(r<rg)$ derart korrigiert, daß die durch die Kurvenfahrt bedingte Zunahme der Geschwindigkeitslängsdifferenz (dvl) wenigstens annähernd ausgeglichen wird.

34. Anordnung nach Anspruch 33, **dadurch gekennzeichnet**, daß ein Kurvenkorrekturwert $(dvk = k_1{}^*(dvg-k_2)^*vf)$ aus einem Produkt eines ersten konstanten Faktors $(k_1)$ mit einer Differenz zwischen einer relativen Geschwindigkeitsquerdifferenz (dvq) und einer Konstanten $(k_2)$ und mit einer mittleren Geschwindigkeit $(vf = (vfl + vfr)/2)$ einer ersten angetriebenen Achse (2) ermittelt wird, wobei sich die Differenzquergeschwindigkeit (dvq) entweder aus der gemittelten Summe von Beträgen der Differenzgeschwindigkeiten der Räder (10; 9, 12, 11) an beiden angetriebenen Achsen (2, 3) $(dvq = (|vfl-vfr|/vf + |vrl-vrr|/vr)/2)$ oder aus dem Betrag der Differenz der mittleren Geschwindigkeiten der Räder (10, 12; 9, 11) jeweils einer Fahrzeugseite $(dvq = |(vfl + vrl)/2-(vfr-vrr)/2|/v)$ ergibt.

35. Anordnung nach Anspruch 33 oder 34, **dadurch gekennzeichnet**, daß der Kurvenkorrekturwert (dvk) zu Null gesetzt wird, wenn die Geschwindigkeitslängsdifferenz $(dvl = vr-vf)$ zwischen einer mittleren Geschwindigkeit $(vr = (vrl + vrr)/2)$ der Räder (11, 12) einer ersten angetriebenen Achse (2) und einer mittleren Geschwindigkeit $(vf = (vfl + vfr)/2)$ der Räder (9, 10) einer zweiten angetriebenen Achse (3) größer als Null ist und/oder deren Betrag $(|dvl|)$ kleiner ist als die Hälfte des Kurvenkorrekturwerts (dvk).

FIG.1

FIG.2

EP 0 336 055 A1

FIG.3

FIG.4

Start — 37

ABS aktiv? — 38
ja → schneller Druckabbau — 39

nein

hb ≐ 1 ? — 41
ja →

nein

v=min(vfl,vfr,vrl,vrr) — 42

tr ≐ 1 ? — 43
ja →

nein

v ≤ vmin ? — 44
ja → Druckaufbau l∧q — 45
nein → Druckabbau l∧q — 46

b ≐ 1 ? — 47
ja →

nein

langsamer Druckabbau — 48

vr=(vrl+vrr)/2    dvlr=|vfr-vrr|/v
vf=(vfl+vfr)/2    dvll=|vfl-vrl|/v
dvl= vr-vf
|dvqr| = |(vrl-vrr)/vr|
|dvqf| = |(vfl-vfr)/vf|
dvq = (|dvqr|+|dvqf|)/2 — 49

Adaption  ds= f(v) — 50

Kurvenkorrektur dk=f(dvq,vf) — 51

dvgph=f(v,ds,dk)  dvgnh=f(v,ds,dk)
dvgpl=f(v,ds,dk)  dvgnl=f(v,ds,dk) — 52

dvl > dvgph V dvl ≤ dvgnh — 53
ja → Druckaufbau — 54

dvl< dvgpl ∧ dvl>dvgnl — 55
ja → Druckabbau — 56
nein

ENDE — 40

FIG.5

EP 0 336 055 A1

FIG.6

FIG.7

EP 0 336 055 A1

FIG.8

EP 0 336 055 A1

FIG.9

FIG.10

EP 0 336 055 A1

FIG. 11

```
                          70
                          │
              ┌───────────────────────┐
              │  tmp 0 = (vr / vf) −1  │────71
              └───────────────────────┘
                          │
      nein    ┌───────────────────────┐   ja
   ◄──────────┤      abgz ≥? 20        ├───────72──────►
              └───────────────────────┘
```

- tmp 2 = abgfakmw / 4 — 103
- abgfakmw = abgfakmw−tmp2+tmp0 — 104
- abgz = abgz + 1 — 105
- abgz =? 20 — 106 — nein — 102
- tmp 2 = abgfakmw/4 — 107
- Notfunktionsflag gesetzt ? — 108 — ja
- tmp 2 >? 0 — 113 — ja
- tmp2 ≤? abgfak — 118 — 115 — ja / ja
- tmp2 >? abgfak — 114
- 109
- abgfak = tmp 2 — 110
- abgfakmw=abgfakmw *64 — 111
- Notfunktionsflag rücksetzen — 112

- abgfakmw = abgfakmw −abgfak+tmp0 — 100
- abgfak=abgfakmw/256 — 101

- nein — 116 — 117
- abgfakmw=abgfak*256 — 117

69

EP 0 336 055 A1

FIG.12

```
                    ○ 69
                     │
          ┌──────────────────────┐
          │        ds = 0        │──── 78
          └──────────────────────┘
                     │
          ┌──────────────────────┐
          │    Kurvenkorrektur    │── 79
          └──────────────────────┘
                     │
      nein  ╱───────────────────╲  119    ja
    ┌──────<      dvl ≥ 0  ?      >────────┐
    │       ╲───────────────────╱          │
    │                                      │
┌──────────────┐                           │
│  dvl : = - dvl │── 120                    │
└──────────────┘                        129 │
    │                                      │
    │   121              ja        ja    ╱──────────────╲
  ╱────────────╲                  ┌─────<   abgfak < 0  ? >──┐
 <  abgfak < 0  ?>────────────────┤       ╲──────────────╱   │
  ╲────────────╱  ja              │                    nein  │
    │ nein                        │                          │
    │  122                        │                          │ 123
    │                             │              ┌──────────────────────┐
    │                             │              │   tmp0 = abgfak * v   │── 124
    │                             │              └──────────────────────┘
    │                             │                          │
    │                         ja  │               ╱──────────────╲  125
    │                     ┌───────┴──────────────<   tmp0 ≥ = 0  ? >
    │                     │                        ╲──────────────╱
    │                     │                            │ nein
    │                     │              ┌──────────────────────┐
    │                     │              │    tmp0 = - tmp0     │── 127
    │                     │              └──────────────────────┘
    │                     │                          │ 126
    │                     │              ┌──────────────────────┐
    │                     │              │    ds = ds + tmp0    │── 128
    │                     │              └──────────────────────┘
    │                     │                          │
    └─────────────────────┴──────────┬───────────────┘
                                      │
                              ╭───────────────╮
                              │     ENDE       │── 81
                              ╰───────────────╯
```

FIG.13

Anfang — 130

131
v $\overset{?}{<}$ vgc — nein

ja

132
dvl $\overset{?}{>}$ 0 ? — ja

nein

133
|dvqf| $\overset{?}{<}$ dvqg — ja

nein

134
|dvqr| $\overset{?}{<}$ dvqg — ja

nein

136
$dvk = k_1 * (dvq - k_2) \times vf$

137
|dvl| < dvk/2 — ja

nein

138
ds = dvk

ENDE — 135

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 245 069 (TOYOTA) <br> * Seite 64, Zeile 10 - Seite 68, letzte Zeile; Figuren 11,15 * <br> --- | 1,6 | B 60 K 23/08 |
| A | DE-A-3 626 025 (NISSAN) <br> * ganzes Dokument * <br> --- | 1,12,15 ,33 | |
| A | DE-A-3 631 180 (NISSAN) <br> * Zusammenfassung * <br> --- | 1,12,15 ,22 | |
| A | EP-A-0 216 318 (OPEL) <br> * Seite 24, Zeile 6 - Seite 26, Zeile 2; Figuren 3-5 * <br> --- | 1,12,15 ,16,33 | |
| A | EP-A-0 215 352 (MAZDA) <br> * Zusammenfassung; Figuren 3,4 * <br> ----- | 1 | |

RECHERCHIERTE SACHGEBIETE (Int. Cl.4)

B 60 K 23/00
B 60 K 17/00

Der vorliegende Recherchenbericht wurde für alle Patentansprüche erstellt

| Recherchenort | Abschlußdatum der Recherche | Prüfer |
|---|---|---|
| BERLIN | 15-06-1989 | KRIEGER P O |